(19) Europäisches Patentamt
European Patent Office
Office européen des brevets

(11) Publication number: **0 102 186**
**B1**

(12) # EUROPEAN PATENT SPECIFICATION

(45) Date of publication of patent specification: **23.12.87**

(51) Int. Cl.$^4$: **C 25 C 3/08**

(21) Application number: **83304263.3**

(22) Date of filing: **22.07.83**

(54) **Improved cell for electrolytic production of aluminum.**

(30) Priority: **22.07.82 US 400772**
**22.07.82 US 400773**
**22.07.82 US 400762**
**22.07.82 US 400764**

(43) Date of publication of application:
**07.03.84 Bulletin 84/10**

(45) Publication of the grant of the patent:
**23.12.87 Bulletin 87/52**

(84) Designated Contracting States:
**DE FR GB**

(56) References cited:
**WO-A-83/00338**
**WO-A-83/04271**
**US-A-3 400 061**
**US-A-3 661 736**
**US-A-4 308 114**

(73) Proprietor: **COMMONWEALTH ALUMINUM CORPORATION**
**3 Bethesda Metro Center Suite 1100**
**Bethesda Maryland 20814 (US)**

(72) Inventor: **Boxall, Larry George**
**1210 White Mills Road**
**Baltimore Maryland 21228 (US)**
Inventor: **Buchta, William Mark**
**1013 Francis Avenue**
**Baltimore Maryland 21227 (US)**
Inventor: **Cooke, Arthur Vicars**
**12 E. Fallridge Court**
**Baltimore Maryland 21207 (US)**
Inventor: **Nagle, Dennis Charles**
**6618 Hunters Wood Circle**
**Catonsville Maryland 21228 (US)**
Inventor: **Townsend, Douglas William**
**492 Longtowne Court**
**Glen Burnie Maryland 21061 (US)**
Inventor: **Montague, Wallace Gordon, Jr.**
**321 Upland Road**
**Baltimore Maryland 21208 (US)**

(74) Representative: **Thomas, Roger Tamlyn et al**
**D. Young & Co. 10 Staple Inn**
**London WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 102 186 B1**

**Description**

This invention relates to electrolytic reduction cells, particularly for the production of aluminum, coating compositions for such cells as well as aluminum wettable cathodes for such cells.

The manufacture of aluminum is conducted conventionally by the Hall-Heroult electrolytic reduction process, whereby aluminum oxide is dissolved in molten cryolite and electrolized at temperatures of from 900°C to 1000°C. This process is conducted in a reduction cell typically comprising a steel shell provided with an insulating lining of suitable refractory material, which is in turn provided with a lining of carbon which contacts the molten constituents. One or more anodes, typically made of carbon, are connected to the positive pole of a direct current source, and suspended within the cell. One or more conductor bars connected to the negative pole of the direct current source are embedded in the carbon cathode substrate comprising the floor of the cell, thus casing the cathode substrate to become cathodic upon application of current. If the cathode substrate comprises a carbon lining it typically is constructed from an array of prebaked cathode blocks, rammed together with a mixture typically of anthracite, coke, and coal tar pitch.

In this conventional design of the Hall-Heroult cell, the molten aluminum pool or pad formed during electrolysis itself acts as part of the cathode system. The life span of the carbon lining or cathode material may average three to eight years, but may be shorter under adverse conditions. The deterioration of the carbon lining material is due to erosion and penetration of electrolyte and liquid aluminum as well as intercalation by metallic sodium, which causes swelling and deformation of the carbon blocks and ramming mix.

Difficulties in cell operation have included surface effects on the carbon cathode beneath the aluminum pool, such as the accumulation of undissolved material (sludge or muck) which forms insulating regions on the cell bottom. Penetration of cryolite through the carbon body causes heaving of the cathode blocks. Aluminum penetration to the iron cathode bars results in excessive iron content in the aluminum metal, or in more serious cases a tap-out. Another serious drawback of the carbon cathode is its non-wetting by aluminum, necessitating the maintenance of a substantial height of pool or pad of metal in order to ensure an effective molten aluminum contact over the cathode surface. One problem of maintaining such an aluminum pool is that electromagnetic forces create movements and standing waves in the molten aluminum. To avoid shorting between the metal and the anode, the anode-to-cathode distance (ACD) must be kept at a safe 4 to 6 cms in most designs. For any given cell installation there is a minimum ACD below which there is a serious loss of current efficiency, due to shorting of the metal (aluminum) pad to the anode, resulting from instability of the metal pad, combined with increased back reaction under highly stirred conditions. The electrical resistance of the inter-electrode distance traversed by the current through the electrolyte causes a voltage drop in the range of 1.4 to 2.7 volts, which represents from 30 to 60 percent of the voltage drop in a cell, and is the largest single voltage drop in a given cell.

To reduce ACD and associated voltage drop, extensive research using Refractory Hard Materials (RHM), such as $TiB_2$, as cathode materials has been carried out since the 1950's. $TiB_2$ is only very slightly soluble in aluminum, is highly conductive, and is wetted by aluminum. This property of wettability allows an aluminum film to be electrolytically deposited directly on an RHM cathode surface, and avoids the necessity for an aluminum pad. Because titanium diboride and similar Refractory Hard Materials are wetted by aluminum, resist the corrosive environment of a reduction cell, and are excellent electrical conductors, numerous cell designs utilizing Refractory Hard Materials have been proposed in an attempt to save energy, in part by reducing anode-to-cathode distance.

The use of titanium diboride current-conducting elements in electrolytic cells for the production or refining of aluminum is described in the following exemplary U.S. patents: U.S. 2,915,442, 3,028,324, 3,215,615, 3,314,876, 3,330,756, 3,156,639, 3,274,093, and 3,400,061. Despite the rather extensive effort expended in the past, as indicated by these and other patents, and the potential advantages of the use of titanium diboride as a current-conducting element, such compositions do not appear to have been commercially adopted on any significant scale by the aluminum industry. Lack of acceptance of $TiB_2$ or RHM current-conducting elements of the prior art is related to their lack of stability in service in electrolytic reduction cells. It has been reported that such current-conducting elements fail after relatively short periods in service. Such failure has been associated with the penetration of the self-bonded RHM structure by the electrolyte, and/or aluminum, thereby causing critical weakening with consequent cracking and failure. It is well known that liquid phases penetrating the grain boundaries of solids can have undesirable effects. For example, RHM tiles wherein oxygen impurities tend to segregate along grain boundaries are susceptible to rapid attack by aluminum metal and/or cryolite bath. Prior art techniques to combat $TiB_2$ tile disintegration in aluminum cells have been to use highly refined $TiB_2$ powder to make the tile, containing less than 50 ppm oxygen at 3 or 4 times the cost of commercially pure $TiB_2$ powder containing about 3000 ppm oxygen. Moreover, fabrication further increases the cost of such tiles substantially. However, no cell utilizing $TiB_2$ tiles is known to have operated successfully for extended periods without loss of adhesion of the tiles to the cathode, or disintegration of the tiles. Other reasons proposed for failure of RHM tiles and coatings have been the solubility of the composition in molten aluminum or molten flux, or the lack of mechanical strength and resistance to thermal shock. Additionally, different types of $TiB_2$ coating materials, applied to carbon substrates, have failed due to differential thermal expansion between the titanium diboride material and the carbon cathode block. To our knowledge no prior RHM-containing materials have been

successfully operated as a commercially employed cathode substrate because of thermal expansion mismatch, bonding problems, etc.

For example, U.S. Patent 3,400,061, of Lewis et al, assigned to Kaiser Aluminum, teaches a cell construction with a drained and wetted cathode, wherein the Refractory Hard Material cathode surface consists of a mixture of Refractory Hard Material, at least 5 percent carbon, and generally 10 to 20% by weight pitch binder, baked at 900°C or more. According to the patent, such a composite cathode has a higher degree of dimensional stability than previously available. The composite cathode coating material of this reference may be rammed into place in the cell bottom. This technique has not been widely adopted, however, due to susceptibility to attack by the electrolytic bath, as taught by a later Kaiser Aluminum U.S. Patent, No. 4,093,524 of Payne.

Said U.S. Patent 4,093,524, of Payne, claims an improved method of bonding titanium diboride, and other Refractory Hard Materials, to a conductive substrate such as graphite, or to silicon carbide. The cathode surface is made from titanium diboride tiles, 0.3 to 2.5 cm thick. However, the large differences in thermal expansion coefficients between such Refractory Hard Material tiles and carbon precludes the formation of a bond which will be effective both at room temperature and at operating temperatures of the cell. The bonding is accordingly formed in-situ at the interface between the Refractory Hard Material tile and the carbon by a reaction between aluminum and carbon to form aluminum carbide near the cell operating temperature. However, since the bond is not formed until high temperatures are reached, tiles are easily displaced during startup procedures. The bonding is accelerated by passing electrical current across the surface, resulting in a very thin aluminum carbide bond. However, aluminum and/or electrolyte attack upon the bond results if the tiles are installed too far apart, and if the plates are installed too close together, they bulge at operating temperature, resulting in rapid deterioration of the cell lining and in disturbance of cell operations. Accordingly, this concept has not been extensively utilized.

Holliday, in U.S. Patent 3,661,736, claims a cheap and dimensionally stable composite cathode for a drained and wetted cell, comprising particles or chunks of arc-melted "RHM alloy" embedded in an electrically conductive matrix. The matrix consists of carbon or graphite and a powdered filler such as aluminum carbide, titanium carbide or titanium nitride. However, in operation of such a cell, electrolyte and/or aluminum attack grain boundaries in the chunks of arc-melted Refractory Hard Material alloy, as well as the large areas of carbon or graphite matrix, at the rate of about one centimeter per annum, leading to early destruction of the cathodic surface.

U.S. Patent 4,308,114, of Das et al, discloses a cathode surface comprised of Refractory Hard Material in a graphitic matrix. In this case, the Refractory Hard Material is composited with a pitch binder, and subjected to graphitization of 2350°C, or above. Such cathodes are subject to early failure due to rapid ablation, and possible intercalation and erosion of the graphite matrix.

Our European Patent Application 0083654 (derived from WO—A—8 300 338) discloses a composition for coating the cathode surface of an aluminum reduction cell which comprises Refractory Hard Material, a resin selected from phenolic resins, furane resin precursors, and mixtures thereof, mix liquid, curing agent, particulate carbonaceous filler having a particle size of less than 100 mesh, and carbonaceous additive in the form of particulate material having a particle size greater than 100 mesh and/or carbon fibers.

European Patent Application 0111543 (derived from WO—A—8 304 271) discloses a monolithic cathodic element for an aluminum reduction cell, the element having an upper portion having an anode-facing surface and a lower portion functioning as a support means for the upper portion and the area of the anode-facing surface is greater than the cross-sectional area of the support means. The element may be formed from a sintered pre-form, the pre-form comprising Refractory Hard Material, carbon material and a carbon-forming binder such as coal tar pitch.

In addition to the above patents, a number of other references relate to the use of titanium diboride in tile form. Titanium diboride tiles of high purity and density have been tested, but they generally exhibit poor thermal shock resistance and are difficult to bond to carbon substrates employed in conventional cells. Mechanisms of de-bonding are believed to involve high stresses generated by the thermal expansion mismatch between the titanium diboride and carbon, as well as aluminum penetration along the interface between the tiles and the adhesive holding the tiles in place, due to wetting of the bottom surface of the tile by aluminum. In addition to debonding, disintegration of even high purity tiles may occur due to aluminum penetration of grain boundaries. These problems, coupled with the high cost of the titanium diboride tiles, have discouraged extensive commercial use of titanium diboride in conventional electrolytic cells, and limited its use in new cell design. We have now found it possible to overcome the deficiencies of past attempts to utilize Refractory Hard Materials as a surface coating for carbon cathode blocks, and for monolithic cathode surfaces.

The present invention relates to aluminum cells. One improvement comprises the use of a carbon-Refractory Hard Material coating composition, containing Refractory Hard Material, a thermosetting binder system, carbonaceous filler and additive, and modifying agents, which is applied to a carbon cathode and cured in-situ to a hard, tough surface comprising RHM in a carbonized binder matrix. The carbonaceous additive utilized in the composition applied to the cathodes of the cells of this invention may include carbon fibers, which act as crack arrestors and strengtheners. Sufficient RHM is conveniently incorporated in the coating material to ensure continuous aluminum wetting of the surface. Thus, the coating provides an economic and effective application of the advantages of RHM in cathodes, while

eliminating the need for more costly RHM tiles. The various aspects of the invention are defined in the appended claims.

Thus in accordance with the invention there is provided a cell for the electrolytic reduction of alumina to aluminum, having a cathode comprising a cathode substrate with an aluminum wettable surface layer bonded thereto, said layer comprising Refractory Hard Material in a non-graphitized carbon matrix having a rate of ablation during operation of said cell substantially equal to the combined rate of wear and dissolution of said Refractory Hard Material, said surface layer exhibiting an expansion between 800°C and 1000°C of less than 0.2 percent, and being obtained by curing and carbonizing a coating comprising: Refractory Hard Material; thermosetting resinous binder comprising a non-graphitizing thermosetting resin other than a phenolic resin, a furane resin precursor or a mixture thereof; mix liquid; particulate carbonaceous filler having a particle size of less than 100 mesh; and carbonaceous additive in the form of particulate material having a particle size greater than 100 mesh and/or carbon fibers.

According to the present invention, it has been found that cathode structures may be coated with Refractory Hard Material (RHM) combined with specified thermoset bonding agents and other materials to improve the conventional carbon lining of an aluminum reduction cell. Such coated cathodes combine the advantages of conventional carbon linings, such as structural integrity and low cost, with desired properties attained by use of the Refractory Hard Materials. Such improvements include wettability by molten aluminum, low solubility in the molten aluminum-cryolite environment, good electrical conductivity, and decreased muck adhesion. In addition, the present invention is applicable to existing reduction cells without the cost and time of a complete cell redesign, or the high cost of producing RHM tiles or RHM alloy tiles suggested by the prior art. The coating of the present invention may also be used in cell designs which utilize sloped cathodes.

The "coating composition" utilized in the present invention comprises Refractory Hard Material, carbonaceous additive, carbonaceous filler, and binder system. As used herein, the terms "coating composition" or "coating material" are intended to encompass the combination of all of these materials. The term "coating", on the other hand, may comprise less, depending on state of drying, cure, or carbonization, since for example, mix liquid may be evaporated, and/or polymerized, during cure and carbonization.

The "Refractory Hard Materials" are defined as the borides, carbides, silicides, and nitrides of the transition metals in the fourth to sixth group of the periodic system, often referred to as Refractory Hard Metals, and alloys thereof.

"Resinous binder" designates a polymerizable and/or cross-linkable thermosetting carbonaceous substance.

The "mix liquid" utilized in the present invention functions in a variety of manners in the coating composition of the present invention, depending upon specific composition. It may be present to allow easy and uniform mixing of the solid components of the coating composition and to provide an easily spreadable mass. Certain mix liquids, such as furfural, may also permit an increase in the amount of carbonaceous filler which may be incorporated in the coating composition. The mix liquid may also enhance internal bonding and bonding between the coating and the carbon substrate, when it is a solvent containing the resinous binder, and/or constitutes the resinous binder or part of the resinous binder. This is because a dissolved resin or liquid resin may more easily penetrate and impregnate permeable constituents of the coating, as well as the carbon substrate. The mix liquid also permits wicking of the resin into interstitial voids between particles of the coating composition by capillary action. The mix liquid may act solely as a solvent for the resinous binder (already present in the solids portion of the binder system), such as methyl ethyl ketone (which could dissolve a novolac if present in the solids), and be evaporated during cure and carbonization operations. If, on the other hand, the mix liquid is present simply as an inert carrier liquid, then it too may be evaporated during cure and carbonization. Otherwise, the mix liquid may function as a combined solvent and resin former, such as furfuryl alcohol and furfural, part of which volatilizes during heating while the remainder becomes incorporated into the resinous binder. In another instance, the mix liquid may be the resinous binder per se, such as where the resinous binder is a liquid such as furfural (in combination with phenol), furfuryl alcohol, or low polymers of these, or a resole. The mix liquid may also comprise the resinous binder in the case of a solid resin, such as a novolac, dissolved in a solvent (the solvent portion of which may volatilize during heat up), or a high viscosity resin such as a partially polymerized resole thinned by a solvent. The mix liquid may also contain gas release agents, modifying agents, and curing agents.

"Binder system" indicates resinous binder, mix liquid, and, if required, gas release agents, modifying agents, and curing agents.

"Gas release agents are agents which may be present and which form liquid phases which seep through the coating and then evaporate, to create small channels within the coating to permit release of volatiles.

"Modifying agents" materials which may be added to the resinous binder to modify, for example, curing, electrical properties, or physical properties such as flexural strength or impact strength prior to carbonization of the coating.

"Curing agents" are agents required to either copolymerize with the resin or to activate the resin to a

state in which the resin may polymerize or copolymerize. Cross-linking or activating agents fall into this category, as do catalysts required for most polymerization and cross-linking reactions.

"Carbonaceous filler" is intended to mean those particulate carbonaceous materials present, either as a component of a known carbon cement or as part of a proprietary or custom carbon system, usually having a C:H ratio greater than 2:1, and which have a particle size of less than 100 mesh. (All mesh sizes herein are in accordance with the Tyler standard sieve series.) While a carbonaceous filler may have reactive groups present, and need not be fully carbonized, such materials do not polymerize with themselves as the resinous binder material does. Further, carbonaceous filler is substantially insoluble in commonly used solvents such as methyl ethyl ketone or quinoline, while the resinous binder (in its incompletely cured state) is usually soluble therein.

"Carbonaceous additives" are those carbonaceous materials present, either as a component of a known carbon cement or as part of a proprietary or custom carbon system, usually having a C:H ratio greater than 2:1, and which comprise particulate carbon aggregate having a particle size greater than 100 mesh preferably between −4 mesh and +100 mesh (that is the material will pass a 4 mesh but will not pass a 100 mesh), and/or carbon fibers.

The term "carbon system" encompasses binder system plus carbonaceous additive and carbonaceous filler; or, coating composition minus RHM.

"Carbon cement" is intended to mean a commercially available carbonaceous cement or adhesive, comprising a resinous binder, mix liquid, carbonaceous filler, and curing agents, the solid and liquid portions of which may be packaged separately to increase shelf life, or as a premixed cement. Gas release agents, and/or modifying agents may be present in such systems, or may be added thereto for use in the present invention. Carbonaceous additives are added to such systems for use in the present invention if not present in a commercially available formulation.

One or more phenolic resins, furane resin precursors or mixtures thereof may additionally present as part of the resinous binder.

Pitch may also be present as part of the resinous binder, as a modifying material, but requires the presence of a suitable curing agent, such as hexamethylenetetramine. Such a curing agent may be already present as a component of the resinous binder, or may be added thereto to facilitate cross-linkage between the resinous binder and the pitch, or linkage between the pitch and carbonaceous filler, or self-linkage between the polynuclear aromatics which comprise the bulk of pitch. Although pitch is known to constitute a graphite precursor, graphitization is not realized in the present invention. Thus, the graphite precursor is dispersed within the resinous binder, which is an amorphous carbon precursor. Pitch may seep through the coating to provide gas release channels, and may, in the presence of appropriate curing agents, cross link with the resinous binder and/or the carbonaceous filler.

The coating material utilized in the present invention is so constituted to achieve a number of critical objectives. First, the coating composition can yield to accommodate shrinkage and expansion differences, so that the coating adheres tenaciously to the cathode substrate over temperatures up to about 800°C, at which temperature a slowly heated coating composition has been fully cured and carbonized to a rigid mass. It then has a thermal expansion coefficient thereafter very similar to that of the substrate to which it is applied. Further, the carbon content, and type of resinous binder, of the coating material are such that a high total char formation occurs during carbonization. This minimizes formation of large closed voids and excessive gas evolution. Also, the carbon matrix of the carbonized coating has an ablation rate in service equal to or very slightly greater than the combined rate of wear and dissolution of the Refractory Hard Material in an aluminum cell environment, thus assuring even wear of the coating surface, and continual exposure of Refractory Hard Material at the surface. "Ablation" is defined herein to encompass the loss and consequent thinning of a material through a combination of mechanical and chemical mechanisms. Purely graphitic structures fail in this respect, due to considerably faster loss rates of the anisotropic structure of the graphitic matrix, caused by sodium intercalation, for example, and the weak bonds between atomic layers of graphitic material. To achieve these critical objectives, it has been discovered that it is necessary to provide a carbon matrix having very specific characteristics, such that the carbon matrix of the present invention provides a high degree of strength in three dimensions, as opposed to having the planar weakness present in graphite.

First, to achieve an adherent coating over the entire temperature range to which the coated cathode block may be subjected, it is generally critical that the coating material exhibit a reasonable degree of dimensional yield over the temperature range from ambient to about 800°C, in which range the coating releases volatiles, and undergoes curing and carbonization to a solid, rigid mass. In this temperature range, the coating composition may be subject to "thinning" or compression, a vertical thickness change, to accommodate volumetric contraction or shrinkage of the coating, vis-a-vis the positive linear expansion of the block to which it is applied. It is noted that the resinous binder, per se, undergoes considerable expansion and contraction over this temperature range, and that the presence of carbon fiber is most effective in strengthening the coating during this stage of cure and carbonization, by minimizing harmful cracking and permitting fine cracking, which permits stress relief and helps accommodate expansion differentials between the coating and the substrate. However, once the coating composition has been carbonized to a rigid, hard solid, it is important that the thermal expansion coefficient of the coating be essentially equal to the thermal expansion coefficient of the cathode substrate. Thus, the value of the

percentage of expansion of the carbonized coating should conveniently be within about ±0.2 of the value of percentage of expansion of the cathode substrate, and preferably within about +0.1 over the temperature range of from about 800°C to about 1000°C, for example. Thus, if the cathode substrate to be coated exhibits an expansion of +0.15 percent over the temperature range from about 800°C to about 1000°C, or higher, the coating should exhibit an expansion (over the same range) of from −0.05 to +0.35 percent, and preferably from +0.05 to +0.25 percent.

It is desirable that the amount of shrinkage that the cured binder system undergoes during carbonization be as small as possible. This may be accomplished by selection of a carbonaceous resin which when utilized in accordance with the present invention will provide a coating composition which when subjected to carbonization exhibits a shrinkage of the coating on the substrate less than that which would induce coating failure, cathode block failure, or separation of coating from the cathode substrate. Fine vertical cracking within the carbonized coating is an acceptable stress relief mechanism. The presence of carbonaceous additive and/or filler is beneficial.

Both shrinkage and expansion of the cured binder system and the coating composition may be measured in the following fashion. A sample of the composition to be tested is prepared and spread in a Teflon® coated mold having dimensions 5 cm×1.27 cm×0.64 cm deep. The composition is cured, and allowed to cool before removal from the mold. The piece is then cut into four test samples 2.54 cm×0.64 cm×0.64 cm, which are then dried to constant weight at 250°C in an alumina crucible. A test sample is measured utilizing a micrometer, then heated from room temperature to 1000°C in a dilatometer which is continuously flushed with argon. The expansion/contraction is recorded continuously as a function of temperature on a chart recorder. Two expansion/shrinkage values are calculated: One based on original sample length and final length at 1000°C; the other based upon original sample length and final length after return to room temperature (this is termed "overall contraction"). Samples are also measured with the micrometer after cooling, as a check on the chart recorder. It is desired that the full cycle or overall contraction be preferably less than about 1.0 percent.

In addition to the above considerations, it has been found to be generally important to utilize a binder system which, when subjected to carbonization, has a char yield of greater than about 25 percent. Char yield is defined herein as the mass of stable carbonaceous residue formed by the thermal decomposition of unit mass of the binder system. Thermogravimetric analyses of various binder systems have demonstrated that the amount of char yield is a function of the aromaticity of the resin structure. In general, carbon rings that are bonded at two or more sites will usually remain as char. Ladder polymers are the most stable, losing only hydrogen, and giving a very high carbon char yield.

Char yield of a binder system, as utilized herein, is determined by curing a proposed carbon system (i.e. binder system plus carbonaceous filler) for a 24 hour period so as to achieve polymerization and/or cross-linkage, followed by heating at 250°C for sufficient time to achieve constant weight, so as to eliminate volatiles, polymerization products, and/or unreacted liquid. The sample is then sintered to 1000°C in a non-oxidizing atmosphere, and the remaining char weight determined. Similarly, the char weight of carbonaceous filler present in the carbon system is determined, and subtracted from the char weight of the carbon system to determine the char weight of the binder system. From the weight of the carbon system at 250°C, and the known weight of carbonaceous filler at 250°C, one may calculate the weight of the binder system at 250°C. The char yield of the binder system is then calculated, as a percentage, from the char weight of the binder system and the weight of the binder system at 250°C. It has been observed that binder systems exhibiting a char yield of greater than about 25% give acceptable coatings upon cure and carbonization, while a binder system exhibiting 8% char yield gave an unacceptable carbon matrix upon carbonization. Char yields in excess of 50% are preferred.

To achieve a long-lasting coating composition in the environment of an aluminum cell, it is desirable that the rate of ablation of the cured and carbonized carbon system be close to that of the Refractory Hard Material in such environment. As the Refractory Hard Material is removed from the coating, the carbon matrix thereof is removed at a similar or very slightly faster rate, thus exposing additional Refractory Hard Material to the cell environment. In this manner, the coated cathode surface remains essentially constant, in terms of Refractory Hard Material content, thus improving cell operation as measured by uniformity of performance. In previous attempts to provide Refractory Hard Material coated cathodes, ablation and/or intergranular attack have resulted in rapid surface deterioration due to depletion of either the Refractory Hard Material or the carbon matrix at a rate greater than the other, resulting in periods when there are localized areas having either a Refractory Hard Material rich surface composition with insufficient binding capability, or a carbon-rich surface with insufficient Refractory Hard Material. The present invention overcomes these failures by providing a coating in which Refractory Hard Material and carbon matrix are dissolved or otherwise depleted at approximately equal rates.

It is important to clarify or distinguish between carbonization and graphitizing as they apply to heating carbonaceous bodies in the context of the present invention. "Carbonizing" is normally done by heating a carbonaceous body, either in unitary or particulate form, for the purpose of driving off volatiles, and progressively increasing the ratio of carbon to hydrogen, and to progressively eliminate hydrogen from the body. In the carbonizing process, temperature is gradually increased to allow for the slow evolution of volatiles such as decomposition products so as to avoid blister formation, and to permit volumetric shrinkage (which will occur at some point in the operation) to proceed gradually, so as to avoid formation

of large cracks. While curing is considered to take place at temperatures up to about 250°C, carbonization temperatures normally range from about 250°C to about 1000°C, although higher temperatures up to 1600°C or higher also can be employed. While carbonization may be continued to about 1000°C, or higher, the carbonization of the carbonaceous materials present is essentially complete at about 800°C, and the resinous binder has been carbonized to bind the filler materials and RHM into a durable structure. The initial curing and initial stage of the carbonization operation are normally carried out in a conventional radiant or convection-type furnace heated by gas or oil, with the heat input to the carbon being by indirect heat transfer, or direct flame contact. At some point, e.g. above about 250°C, the carbon body becomes sufficiently electrically conductive to permit resistive heating, if desired.

It is to be noted that the coating material is preferably in the form of a workable paste, which may be trowelled or smoothed to a desired thickness and surface smoothness. This coating is cured, by polymerizing and/or cross-linking, and losing volatiles, by slowly heating to about 250°C, at which point the coating has reached the thermoset stage and formed a relatively solid mass. Carbonizing, at temperatures above 250°C, then converts this coating to a rigid matrix consisting essentially of non-graphitized carbon with RHM, carbonaceous additive, and carbonaceous filler therein.

A distinction is to be drawn between this material and prior art materials employing only pitch binders, in the absence of cross-linking or polymerizing agents. By itself, pitch does not cross-link, or polymerize, but in fact passes through a liquid "plastic" state or zone between about 50°C and about 500°C, in which temperature range substantial swelling occurs, succeeded by a period when the carbonaceous mass congeals (and contracts) into a hard solid coke body. The coating composition of the present invention, on the other hand, commences polymerization and/or cross-linking at temperatures which may be as low as about 20°C, and is cured to a relatively hard resin state by temperatures below about 250°C, dependent upon cure time and coating thickness, followed by progressive hardening through carbonization.

The entire heating cycle in carbonization is somewhat time consuming. Carbonizing typically results in loss of volatiles, and elimination of volatile reaction products of thermal decomposition. However, there is no significant change in the crystallographic structure of the carbonaceous additive or filler, and the carbonized resin continues to appear as amorphous, even though it may bond together a substantial quantity of graphitic material or material containing graphitic crystallites.

Graphitization is readily distinguished from carbonizing or carbonization, as described, in that it requires considerably higher temperatures and longer time periods, and produces drastic and easily observed changes in the atomic structure. In graphitizing, the temperatures employed range from a little over about 2000°C up to 3000°C, with the more typical temperatures ranging from about 2400°C or 2500°C to 3000°C, as these temperatures are usually associated with the higher quality grades of graphite. This heating occurs over a rather extensive time period, typically about two weeks. The heating is done in a non-oxidizing atmosphere, typically by passing electric current directly through the carbon so as to heat the carbon internally and directly by its own electrical resistance, as opposed to the more conventional furnace and heating means employed in carbonizing. Graphitizing drastically alters and rearranges an amorphous or partially graphitic internal structure, by developing a graphite crystal atomic arrangement. A graphite structure exhibits the well-known close packed, layered, and specifically oriented graphitic structural arrangement. Generally, graphitization is only practicable with the well known graphite precursor substances such as pitch.

To illustrate some of the differences in internal structure in comparing graphite with non-graphitic or amorphous carbon, the $d_{002}$ and $L_c$ dimensions are useful. The "$L_c$" dimension applies to the crystal or crystallite size in the "c" direction, the direction normal to the basal plane, and the "$d_{002}$" dimension is the inter layer spacing. These dimensions are normally determined by x-ray diffraction techniques. R. E. Franklin defines amorphous carbon as having an interlayer spacing ($d_{002}$) of 3.44 Å and crystalline of 3.35 Å (Acta Crystallographica, Vol. 3, p. 107 (1950); Proceedings of the Royal Society of London, Vol. A209, p. 196 (1951); Acta Crystallographica, Vol. 4, p. 253 (1951). During the process of graphitization, the amorphous structure of graphite precursor carbons is changed to the crystalline structure of graphite which is shown by an increase in the $L_c$ dimension and a decrease in the $d_{002}$ dimension. In amorphous carbon, the $L_c$ dimension normally ranges from about 10 to about 100 Angstrom units (Å), whereas most graphite typically exhibits an $L_c$ dimension of greater than about 350 or 400 Å, typically from over 400 Å to about 1000 Å. There is another substantially graphitic structure wherein $L_c$ is between about 100 Å or more up to about 350 or 400 Å, and this is sometimes referred to as "semi-graphitic", having the same general atomic arrangement and configuration in its structure as graphite just described but differing some from the more common x-ray diffraction pattern for graphite due to a slight difference of orientation of successive atomic planes. Both graphite structures have a $d_{002}$ dimension less than about 3.4 Å. In general, graphitizing at temperatures from about 2000°C up to about 2400°C tends to produce the "semi-graphitic" structure whereas temperatures over 2400°C tend to produce the "normal" graphite structure.

One acceptable practice in producing carbonaceous coatings for aluminum cell cathodes according to the present invention is to employ particulate graphite as a filler material which is added to the binder and other components. The mixture is then spread, cured, and carbonized. While this carbonized carbonaceous material may contain some graphite, it is not bonded by the graphite, but rather contains both graphite particles from the filler and amorphous carbon derived from the binder and/or components of the carbonaceous filler. In practicing the present invention it is important that the carbonized cathode coating

be constituted of a non-graphitizing binder so as to assure the proper combination of electrical and thermal conductivity, coefficient of expansion, ablation rate, and stability properties in the carbon-Refractory Hard Metal surface.

While the borides, carbides, silicides and nitrides of elements in Groups IV to VI of the Periodic Table generally all possess high melting points and hardness, good electronic and thermal conductivity, are wetted by molten aluminum, and are resistant to aluminum and alumina-cryolite melts, $TiB_2$ is the preferred RHM due to its relatively low cost and high resistance to oxy-fluoride melts and molten aluminum. Suitably, Refractory Hard Material particle sizes may range from submicron to about 10 mesh, and preferably from submicron to about −100 mesh, and most preferably about −325 mesh.

It is generally thought that grain boundaries between ($TiB_2$ or other Refractory Hard Material) crystals are sensitized, i.e., are made susceptible to attack by the segregation of oxide impurities. Migration of oxygen dissolved in individual crystals of $TiB_2$ to crystal boundaries is also thought to be possible by diffusional processes at the temperatures at which aluminum cells normally run, i.e., around 1000°C. Thus, oxygen impurities, whether or not originally segregated at the surface of $TiB_2$ crystals, can migrate to the inter-crystalline boundaries and make them susceptible to attack. Attack of the entire area of the intercrystalline boundaries results in loss of $TiB_2$ crystals.

It has now been shown that single crystals of $TiB_2$, bicrystals of $TiB_2$, open clusters of crystals of $TiB_2$, and/or crushed and ground crystals of $TiB_2$, when in intimate contact with the carbon matrix do not crack or disintegrate, when exposed to bath and molten aluminum in aluminum cells for long periods of time. All of these shall be included within the term "single crystals" as employed herein. It is also to be understood that while discussion focuses on $TiB_2$, other RHM materials are also intended. The common feature of all of these particles is that they generally have more exposed free crystal surfaces or transcrystalline fractures than internal grain boundaries between two or more crystals. The binder system is thus able to adhere to almost every $TiB_2$ crystal, through bonding to crystal facets or broken surfaces. The open clusters of smaller $TiB_2$ crystals can be penetrated by the carbonaceous binder system, so that even if the grain boundaries between $TiB_2$ crystals should be attacked by the bath, the $TiB_2$ crystals will still be held within the coating by the binder. This has been observed in broken pieces of the carbonized coating. $TiB_2$ tends to break in a conchoidal (or glasslike) manner so that broken pieces have surfaces that cut across crystal planes, and the binder system forms strong bonds to such surfaces.

Both the carbon and $TiB_2$ components of surfaces made in accordance with this invention appear to slowly dissolve, or erode, so that new $TiB_2$ crystals are continuously exposed to the molten aluminum. Both $TiB_2$ and carbon dissolve through various chemical mechanisms in the aluminum metal in the cell up to saturation concentrations. However, they may be present beyond the saturation limit as undissolved particles of the elements, or in compounds containing the elements. The rate at which both $TiB_2$ and carbon are lost from the cathode surface is dependent on such factors as temperature, motion of the metal, bath, and muck, and overall bath chemistry. It is believed that some of the $TiB_2$ particles are carried away into the aluminum before being completely dissolved. The $TiB_2$ concentration in the aluminum metal typically is found to be only slightly above the solubility limit for the temperature at which the cell is operated. The rate of carbon loss is a critical factor in RHM-containing wetted cathode cells as the carbon is used to bond the RHM particles in the cathode coating. An excessive rate of carbon loss results in undercutting $TiB_2$ particles in the matrix, and a subsequent increase in $TiB_2$ loss from the cathode surface. Excessively low carbon loss would result in areas of local depletion of $TiB_2$ particle concentration at the cathode surface, and subsequently a loss of aluminum wetting.

The $TiB_2$ preferred for use in this invention is typically specified as −325 mesh. If the $TiB_2$ is made by carbothermic reduction on titanium and boron oxides and carbides, individual particles will normally fit the prerequisite category of single crystals. This also holds true for $TiB_2$ made by plasma methods described in U.S. Patent 4,282,195 to Hoekje of PPG Industries. Producing $TiB_2$ by an arc melting process generally results in a polycrystal comprised of relatively large individual crystals. Hence, on crushing to −20 mesh, this would normally provide particles that each have only short sections of internal grain boundary. If −325 mesh $TiB_2$ powder is made by crushing arc-melted $TiB_2$ chunks, each of the resulting particles is smaller than the original individual crystals, so that each particle consists of a broken piece of a larger crystal (or, for example, 2 or 3 crystals joined together by some inter-crystalline boundaries). Thus, very few crystals would be entirely isolated from the binder system, and even if the few inter-crystalline boundaries are completely dissolved by the bath, very few crystals of $TiB_2$ would break away.

$TiB_2$ made by carbothermic reduction of powders is typically composed of material that is easily crushed to −325 mesh without breaking many of the individual crystals. This material, when viewed in a scanning electron microscope, is seen to be composed of tiny single crystals, open clusters of $TiB_2$ single crystals, and broken pieces of $TiB_2$ single crystals.

Other RHM materials may be successfully substituted for $TiB_2$ in the coatings disclosed herein, when appropriate changes in the coating composition are made to account for differences in wettability, surface area, particle size, porosity, and solubility of the RHM. Sufficient RHM is incorporated in the coating composition to ensure aluminum wetting, while thermal expansion mismatch effects are minimized and a dissolution rate of Refractory Hard Material less than the rate of loss of the carbon matrix of the coating is achieved. While discussion of the invention will focus on the use of $TiB_2$ as the preferred RHM, it is contemplated that any suitable RHM, such as $ZrB_2$, or alloys of Refractory Hard Materials, may be utilized.

Sufficient RHM is provided in the coating composition to ensure wettability. In general, the RHM may comprise from about 10 to about 90 percent by weight of the coating composition, and preferably from about 20 to about 70 percent. It has been found that wettability may be achieved at concentrations below about 10 percent, but better results are achieved at ranges from 20 percent upward, with from about 35 to about 60 percent being the most preferred range.

The resinous binders of the present invention may comprise any which meet the aforementioned criteria. Typical resins which can be employed include polyphenylene, heterocyclic resins, epoxy, silicone, alkyd, and polyimide resins. If desired, phenolic and/or furane resins may additionally be present in the resinous binders. Examples of phenolic resins which can be employed include phenol formaldehyde, phenol acetaldehyde, phenol-furfural, m-cresolformaldehyde and resorcinol-formaldehyde resins. Epoxy resins which can be utilized include the diglycidyl ether of bisphenol A, diglycidyl ether of tetrachlorobisphenol A, diglycidyl ether of resorcinol, and the like, and especially the epoxy novolacs. Preferred epoxies comprise the glycidyl ethers such as the glycidyl ethers of the phenols, and particularly those prepared by reacting a dihydric phenol with epichlorhydrin, e.g., the diglycidyl ether of bisphenol A, and epoxy novolacs. The silicone polymers which can be employed include methyl siloxane polymers and mixed methyl phenyl siloxane polymers, e.g., polymers of dimethyl siloxane, polymers of phenylmethylsiloxane, copolymers of phenylmethylsiloxane and dimethylsiloxane, and copolymers of diphenylsiloxane and dimethylsiloxane. Examples of heterocyclic resins are polybenzimidazoles, polyquinoxalines and pyrones. Any of the well known specific alkyds, particularly those modified with phenol formaldehyde, and polyimide resins can be employed. The phenolics and furanes are preferably present in the resins, particularly in view of their relatively low costs.

Furane resins are very advantageously employed in the resinous binder of this invention. Acids and bases commonly are used as catalysts for furane resin polymerization, but may not be required as furanes may copolymerize with other resin in the absence of catalysts. Suitable acid catalysts include inorganic and organic acids such as hydrochloric acid, sulfuric acid, nitric acid, orthophosphoric acid, benzene sulphonic acid, toluene sulphonic acid, naphthalene sulphonic acid, maleic acid, oxalic acid, malonic acid, phthalic acid, lactic acid, and citric acid. This family of catalysts also includes organic anhydrides such as maleic anhydride and phthalic anhydride. Examples of further satisfactory conventional acid catalysts include mineral acid salts of urea, thiourea, substituted ureas such as methyl urea and phenyl thiourea; mineral salts of ethanol amines such as mono-, di-, and triethanolamine; and mineral acid salts of amines such as methyl amine, trimethyl amine, aniline, benzyl amine, morpholine, etc. Preferred acid catalysts have a Ka of at least $10^{-3}$.

Suitable basic catalysts include alkali hydroxides such as lithium hydroxide, sodium hydroxide, potassium hydroxide and the like; and alkaline earth hydroxides such as magnesium hydroxide, calcium hydroxide, and the like. Other satisfactory base catalysts include for example, amine catalysts such as primary amines like ethyl amine, propyl amine, etc.; secondary amines like diisopropyl amine, dimethyl amine, etc.; and tertiary amines like triisobutylamine, triethylamine, etc. Examples of other satisfactory base catalyts are mixtures of alkali hydroxides and alkaline earth hydroxides such as mixtures of sodium hydroxide and calcium hydroxide. A mixture of alkali hydroxides and alkaline earth hydroxides provides a thermosetting binder giving unexpectedly high carbon yields. Suitable amounts of catalyst or curing agents are included with the resinous binder, dependent upon the specific binder selected. Determination of the appropriate curing agent, and the appropriate amount thereof, are within the skill of the art.

By the term "acid cured furane resins" is meant resins such as homopolymers of furfuryl alcohol, homopolymers of furfuryl alcohol cross-linked with furfural, copolymers of furfuryl alcohol and formaldehyde, copolymers of furfuryl alcohol and phenol, copolymers of furfural and phenol, or monomeric materials which contain the furane ring somewhere in the structure, and are capable of being cured to a final set and hardened mass by the addition thereto of an acid catalyst.

Resinification of the compositions in question is dependent upon hydrogen ion concentration and is accelerated by heating, as is well known. Because the reaction occasioned by the addition of the acidic catalyst to the resin is exothermic, care must be taken in the selection and amount of catalyst used, otherwise resinification may proceed too rapidly and the resultant mass may be useless. For this reason, inorganic acids such as hydrochloric acid, sulfuric acid, phosphoric acid and chromic acid generally are not used. On the other hand, inorganic acid salts such as zinc chloride, sodium bisulphate and mercuric chloride are often used, as are latent acid catalysts such as maleic anhydride and phthalic anhydride, which only on heating yield the necessary acid catalyst.

In general, organic compounds ordinarily are preferred to achieve the desired properties in acid cured furane resin-containing resinous products. In addition to the aromatic sulphonic acids, the aromatic sulphonochlorides such as benzene sulphonochloride, para-acetyl benzene sulphonochloride; the aliphatic amino salts of the aromatic sulphonic acids, including the ammonium salts such as ammonium paratoluene sulphonate, dimethyl amino benzene sulphonate, diethyl amino toluene sulphonate, ammonium benzene sulphonate and disulphonate, ammonium phenol sulphonate, ammonium naphthalene sulphonate and disulphonate, ammonium anthracene sulphonate and disulphonate, ammonium sulphanilate; the aromatic amino salts of aromatic sulphonic acids such as the aniline salt of benzene sulphonic acid, the aniline salt of paratoluene sulphonic acid, and the pyridine salt of phenol sulphonic acid; the organic salts of strong inorganic acids such as glyoxal sulphate; the metallic salts of

chlorosulphonic acid such as sodium chlorosulphonate and potassium chlorosulphonate; the aliphatic and aromatic salts of strong inorganic acids such as triethanolamine chloride, aniline hydrochloride, ammonium sulphamate, pyridine sulphate, pyridine bisulphate, and aniline sulphate; the amino salts of sulphanilic acid such as aniline sulphanilate and pyridine sulphonate; the ferric salts of sulphonic acids such as ferric trichlorobenzene; acid anhydrides such as phosphoric anhydride and maleic anhydride; the ammonium salts of alkane sulphonic acids such as ammonium ethane sulphonate; the ferric salts of sulphonic acids such as ferric benzene sulphonate and ferric toluene sulphonate; and the ammonium salts of organic substituted inorganic acids such as ammonium ethyl phosphate, have been used as catalysts for furane resins.

Alkaline catalyzed furane resins suitable include furfural plus a phenol, furfural plus a ketone, and furfuryl alcohol plus an aldehyde and an amine. The furane resin may also optionally be mixed with pitch, to form part of the binder material. This binder material may be mixed with a carbon aggregate or filler. Pitches, such as coal tar pitches, may be present as a modifying component of the binder system, and high boiling point condensed aromatic systems from those are frequently found as impurities in filler materials derived from pitch. Furane resins as contemplated herein, which may be used in the present invention, include the following (with appropriate catalysts):

a. furfural plus a phenol; specific example: furfural and phenol;

b. furfural plus a ketone; examples: furfural and acetone, or furfural and cyclohexanone;

c. furfuryl alcohol plus an aldehyde and an amine; specific example: furfuryl alcohol and formaldehyde and urea.

One example of a furfural resin component suitable for use in the present invention, which is relatively fluid at room temperature and has a suitable char yield, is a mixture consisting essentially of between 50 and 75 percent by weight of coal tar pitch having a softening point above 100°C, and between 50 and 25 percent by weight of monomeric polymerizable thermosetting dispersants consisting of furfural and a member selected from the group consisting of phenol, cyclohexanone, and compounds having the formula:

$$CH_3—CO—R$$

wherein R is a hydrocarbon group having between 2 and 4 carbon atoms, inclusive, and a catalyst. The hydrocarbon group in the above formula may be saturated or unsaturated and straight or branched chain. The time and temperature necessary to solubilize the coal tar pitch in the dispersants will vary with the softening point of the coal tar pitch, the total amount of dispersants, and the relative amounts of the several dispersants. Excessive heats should be avoided to prevent premature polymerization of the binder. While the parameters of time and temperature necessary to solubilize the coal tar pitch in the dispersants cannot be generally stated, they are easily determined by one skilled in the art. In this type of coating composition, the pitch does not function as a modifying agent for the binder, but rather as a functional ingredient having a desirably high char yield.

Generally speaking, molar ratios of furfural to phenol between 0.5 and 2 moles of furfural to 1 mole of phenol are preferred when phenol is the second ingredient of the dispersant component; and molar ratios between 1 and 2 moles of furfural to 1 mole of cyclohexanone, methyl aliphatic ketone of the above formula, or mixtures thereof are preferred when cyclohexanone, methyl aliphatic ketone, or mixtures thereof are the second ingredient of the dispersant component.

One currently commercially available alkaline-catalyzable furane resin, having utility in the present invention, is that obtainable from Quaker Oats Company under the commercial or trade designation "QX-362". It is presently believed that the principal constituents of this binder are furfural and cyclohexanone, although some furfuryl alcohol may also be present.

A group of furfuryl resins which is considered suitable in accordance with the invention is furfuryl alcohol copolymers made by reacting maleic acid or maleic anhydride with a polyhydroxy compound such as ethylene glycol. This forms an ethylenically unsaturated polycarboxylic acid ester prepolymer. The ester prepolymer is then copolymerized with furfuryl alcohol to produce the furfuryl alcohol copolymer. The furfuryl alcohol copolymers described are advantageous because of certain properties such as relatively low volatility, ease of storage, giving off of a minimum of water upon curing, resistance to excessive shrinkage and a relatively short cure reaction. Such copolymers may also be quite suitable for use in accordance with the present invention because of other properties, namely their ability to remain highly flexible after curing.

In addition to those set forth as components of the commercially available carbon cements, such as UCAR® C-34, discussed hereinafter, a wide variety of novolac resins may be used in the basic resinous binder in the present invention. The term novolac refers to a condensation product of a phenolic compound with an aldehyde, the condensation being carried out in the presence of an acid catalyst and generally with a molar excess of phenolic compound to form a novolac resin wherein there are virtually no methylol groups such as are present in resoles, and wherein the molecules of the phenolic compounds are linked together by a methylene group. The phenolic compound may be phenol, or phenol wherein one or more hydrogens are replaced by any of various substituents attached to the benzene ring, a few examples of which are the cresoles, phenyl phenols, 3,5-dialkylphenols, chlorophenols, resorcinol, hydroquinone,

xylenols, and the like. The phenolic compound may instead be naphthyl or hydroxyphenanthrene or another hydroxyl derivative of a compound having a condensed ring system. It should be noted that the novolac resins are not heat curable per se. Novolac resins are cured in the presence of curing agents such as formaldehyde with a base catalyst, hexamethylenetetramine, paraformaldehyde with a base catalyst, ethylenediamineformaldehyde, and the like.

For purposes of the present invention, any fusible novolac which is capable of further polymerization with a suitable aldehyde may be employed. Stated another way, the novolac molecules should generally have two or more available sites for further polymerization and/or cross-linkage. Apart from this limitation, any novolac might be employed, including modified novolacs, i.e., those in which a nonphenolic compound is also included in the molecule, such as the diphenyl oxide or bisphenol-A modified phenol formaldehyde novolac. Mixtures of novolacs may be employed or novolacs containing more than one species of phenolic compounds may be employed.

Novolacs generally have a number-average molecular weight in the range from about 500 to about 1,200, although in exceptional cases the molecular weight may be as low as 300 or as high as 2,000 or more. Unmodified phenol formaldehyde novolacs usually have a number-average weight in the range from about 500 to about 900, most of the commercially available materials falling within this range.

Preferably, novolacs with a molecular weight from about 500 to about 1,200 are employed in the present invention. When a very low molecular weight novolac is used, the temperature at which such novolacs soften and become tacky is usually comparatively low.

A mixture of pitch and novolac may be formed by any convenient technique such as dry blending or melting the pitch and novolac by heating together to form a homogeneous mixture. Various pitches may be utilized for this purpose, as previously indicated.

In addition to the novolac phenolic resins, the use of resoles is also within the scope of the present invention.

Resole resins are most frequently produced by the condensation of phenols and aldehydes under alkaline conditions. Resoles differ from novolacs in that polynuclear methylol-substituted phenols are formed as intermediates in resoles, and resoles are produced by reaction of phenolic substances with excess aldehyde in the presence of an alkyline catalyst. A resole produced by the condensation of phenol with formaldehyde most likely proceeds through intermediates having the following type of structure:

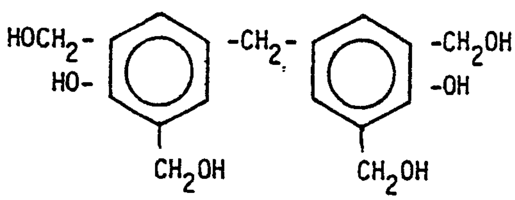

In a typical synthesis, resoles are prepared by heating one mole of phenol with 1.5 moles of formaldehyde under alkaline conditions.

The resole resins are prepared by the condensation of phenols with formaldehyde, or more generally, by the reaction of a phenolic compound, having two or three reactive aromatic ring hydrogen positions, with an aldehyde or aldehyde-liberating or engendering compound capable of undergoing phenol-aldehyde condensation. Illustrative of phenols are phenol, cresol, xylenol, alkyl phenols such as ethylphenol, butylphenol, nonylphenol, dodecylphenol, isopropylmethoxyphenol, chlorophenol, resorcinol, hydroquinone, naphthol, 2,2-bis(p-hydroxyphenyl)propane, and the like and mixtures of such phenols. Large aliphatic groups substituted on the benzene ring may detract from the present invention, since these are lost in heating and hence may decrease char yield and increase volatile emission. Illustrative of aldehydes are formaldehyde, paraformaldehyde, acetaldehyde, acrolein, crotonaldehyde, furfural, and the like. Illustrative of the aldehyde engendering agents is hexamethylenetetramine. Ketones such as acetone are also capable of condensing with the phenolic compounds to form phenolic resins.

The condensation of a phenol and an aldehyde is conducted in the presence of alkaline reagents such as sodium carbonate, sodium acetate, sodium hydroxide, ammonium hydroxide, and the like. When the condensation reaction is completed, if desired, the water and other volatile materials can be removed by distillation, and the catalyst neutralized.

The resole resins are termed heat curable resins. That is, under the application of heat these resins progressively polymerize until they are finally insoluble, infusible and completely cured. For the purposes of the present invention, the curable phenolic resins are considered those which have not so advanced in polymerization that they have become infusible.

Furfuryl alcohol may be employed as the mix liquid in the phenolic resin-containing carbonaceous binder, and is believed to react with the phenolic resin as it cures, and serves as a modifying agent for the resin. The use of furfuryl alcohol is preferred as it has been found that bonds having the high strength obtainable through the use of this mix liquid cannot be produced when other mix liquids are substituted for furfuryl alcohol. Thus, for example, when furfuraldehyde is employed in place of furfuryl alcohol in otherwise identical compositions, bonds are produced having only about half the strength of the bonds produced using the furfuryl alcohol.

Since the net final effect desired is to achieve a surface layer composed essentially of RHM and carbon, the binder system should be readily decomposable, in high yield, to a carbon residue. Such components as resinous binder should comprise from about 1 to about 40 percent of the coating composition, whether as a part of a carbon cement or as a custom carbon system. The resin per se may constitute up to about 50 percent or more by weight of the coating composition. Although higher resin concentrations are possible, little advantage is attained, and extended cure and carbonization cycles may be required. The carbon system should comprise about 10 to about 90 percent of the coating composition, preferably from about 30 to about 80 percent, and most preferably from about 40 percent to about 65 percent of the coating composition applied to the substrate.

One may utilize appropriate blends of carbon and thermosetting resinous binders of the appropriate particle sizes, or alternative commercial compositions. The mix liquid component of the coating composition may vary from approximately 2 weight percent to about 40 weight percent for reasonable evaporation and curing rates, with about 5 percent to about 25 percent being preferred to obtain workable consistency. It is desired that the coating composition be workable and easily spread, as by a trowel. Insufficient liquid will make the mix dry and unspreadable, while excessive liquid results in difficulties in curing and baking.

Various modifying agents may be present to modify the nature of the resinous binder during mixing, curing, and carbonization of the coating composition. These may typically constitute from zero to about 10 percent by weight of the coating composition. Suitable modifying agents for compositions containing phenol formaldehyde resins, for example, include rosin, aniline, copolymers, resin "alloys", etc. Rosin modified phenolics have an important combination of solubility, viscosity and drying characteristics. A well known method of preparing phenolic resins for use in surface coatings involves the heating and blending of phenol-formaldehyde condensates with rosin. Preferably the condensate used is one made from alkyl phenols by alkaline condensation.

Aniline modified phenolics are prepared by treatment of an intermediate phenol formaldehyde condensate with aniline or aniline derivatives, by co-condensation, or by blending a phenol formaldehyde condensate with an aniline-formaldehyde condensate. Aniline modified phenolics have particularly good electrical characteristics. Phenolic resins may be copolymerized with such materials as chlorinated phenols, nitromethane, and organosilicon compounds, e.g. siloxane.

Some of the materials used to treat intermediate phenol formaldehyde condensates are epichlorohydrin, ether resin, ethylene oxide polymers, hydrogen peroxide, ketones, methylolaniline HCl, polyvalent salts of hexanoic acid, stannous chloride, and terpene-phenol products.

Blends of various resinous materials with phenolic resins may be prepared. Exemplary of the more common resin "alloys" are phenolic resins and epoxy resins, ketone-aldehyde condensates, melamine and urea resins, natural and synthetic rubber, polyvinyl chloride, and polyvinyl acetal resins.

Through such modifications, it is quite possible to considerably modify the binder system of the present application. For example, replacement of phenol with meta-cresol would yield a resin soluble in alcohol, having a fast drying time. Such might be advantageous under certain circumstances and cure time requirements. Replacement of phenol with meta-alkyl phenol gives a resin which is more rubbery and flexible, but has less tensile strength. Replacement of phenol with substituted phenols, e.g. p-tertiary butyl phenol, yields resins which are oil soluble, while replacement of phenol with naphthalene and anthracene derived phenols does not alter the phenolic properties greatly but could yield greater compatibility with pitch, in binder systems employing pitch. Replacement of formaldehyde with higher aldehydes, such as acetaldehyde, results in the resin becoming oil soluble.

The addition of glycerol to phenol formaldehyde resoles acts as a plasticizer in the binder systems utilized. Anthracene oil, on the other hand, may be added to furfuryl alcohol as a stabilizer prior to the addition of acid catalyst. Stabilization assists in controlling the rate of polymerization in the presence of acid catalysts.

Certain specific blends are noteworthy. For example, phenol formaldehyde modified with phenol-furfuryl resin has a flat plasticity curve, and does not go through a rubbery stage such as exhibited by phenol formaldehyde. Hence, blends of phenol formaldehyde with phenol-furfuryl are suitable. They offer excellent impact resistance, chemical resistance, rapid cure at high temperatures, and a high capacity for filler. Blends of phenol formaldehyde with certain thermoplastics produce resins suitable for bonding to metal, such as may be considered for use with metallic cathode substrates. Blends with butadiene/acrylonitrile copolymer rubber give improved impact resistance, while blends with resorcinolformaldehyde resins give faster reaction rates and lower cure temperatures. These resins, however, are somewhat more expensive for utilization in the present invention.

Frequently, pitch is present in the coating composition, as a modifying agent or a binder, in concentrations of up to about 50 or even 75 percent when present as a functional ingredient of the binder system. When present as a modifying agent per se, pitch may be present in concentrations up to about 10 percent by weight of the coating composition.

In addition to the RHM and binder system, which may itself include a filler material, it is desirable to provide additional particulate carbon. Some particulate carbon, either amorphous or graphite, is frequently present in the commercially available cements mentioned heretofore. Further particulate carbon may be

added, as either fine powder or coarse aggregate, or mixtures thereof, in the form of amorphous carbon or graphitic carbon.

The carbonaceous filler material may conveniently be present either as a component of a proprietary carbon system or present in a commercial cement, or as an addition to a commercial cement. Such carbonaceous filler is −100 mesh, and preferably −325 mesh, and may comprise fine carbonaceous flour, graphite flour, crushed coke, crushed graphite, carbon black, and the like. The presence of such fine flours yields improved packing density for the granulometry used, that wicks up resin forming liquids to form a dense, highly bonded carbon matrix upon carbonization.

Carbonaceous filler, as fine flour, advantageously comprises from about 1 percent to about 60 percent of the coating composition, with about 10 percent to about 40 percent being preferred.

The carbonaceous additive, or aggregate material, may run from −4 mesh to +100 mesh, and is preferably between −8 mesh and +20 mesh. Such course aggregate apparently permits micro-cracking, assists volatile emission release, reduces shrinkage, and contributes to high carbon yield. Carbonaceous additive, as aggregate and/or fiber, should comprise up to about 70 percent of the coating composition, with from about 5 percent to about 15 percent being preferred.

As previously set forth, it is preferred that carbon fiber be added to the coating composition as a crack arrestor. When such fiber is used, some variations in composition ranges have been found. When carbon fibers are used, they may preferably be made from pitch precursors, organic fiber precursors such as polyacrylonitrile, or rayon. Pitch fibers are considerably cheaper, and accordingly preferred.

Fiber weight may range from zero percent to about 10 percent by weight of the coating composition, preferably from about 0.05 to about 1.0 percent, and more preferably from 0.05 to about 0.5 percent. However, concentrations greater than about 10 percent become comparatively expensive, with little apparent added benefit. Carbon fibers with lengths varying from about 0.16 cm to 1.27 cm length are preferred. Short fibers permit easier mixing and application, and may be used in higher concentration. Sized fibers, consisting of parallel fiber strands bonded together by a material soluble in the mix liquid, are particularly preferred, since they blend most easily with the binder system. Fiber orientation may vary, and the fibers can be mixed as an integral part of the coating composition to facilitate the application procedure.

It is also possible to modify the carbonaceous filler utilized. In this respect, a number of modifying agents may be added to the filler. For example, silica may be added to the carbonaceous filler to impart non-sintering properties to the binder system. In general, however, inorganic fillers make the resinous binder harder to process in accordance with the present invention and decrease char yield.

Gas release agents are appropriately included in the coating composition to avoid blisters and/or excessively large cracks. Suitable gas release agents include combustible oils, soaps, and waxes.

A combustible oil can be employed as the gas release agent in the carbonaceous binder. In order to avoid volatilizing the oil while curing the phenolic resin, it is desirable that the oil have a boiling point higher than the curing temperature of the resin. For this reason, oils having a boiling point above about 150°C, preferably above about 200°C, are most useful, with oils having a boiling point above about 250°C being particularly preferred. While petroleum-base oils, such as paraffin oils, aromatic oils and asphaltic oils, are preferred, other oils, such as animal and vegetable oils, can also be employed. Among the petroleum-base oils, the paraffin oils are preferred. Illustrative of the animal and vegetable oils which can be employed are palm kernal oil, olive oil, peanut oil, beef tallow oil, cottonseed oil, corn oil, soybean oil, and the like. Amounts of oil of up to 3.5 percent by weight of the coating composition, preferably from about 0.4 percent by weight to about 2.0 percent by weight, are suitable.

Soaps may also be used as gas release agents. While the soap employed can be any of the metallic or quaternary ammonium salts of the fatty acids, binders prepared with either the neutral or acid quaternary ammonium soaps are more resistant to oxidation than cements prepared with the more common metallic soaps, so that the use of the non-metallic soaps is preferred. Such non-metallic soap is produced by the reaction of a fatty acid with triethanolamine. The fatty acids employed, like the fatty acids employed to produce metallic soaps, generally contain from about 10 to about 24 carbon atoms, and can be either saturated or unsaturated. Among the saturated fatty acids which can be employed are capric, lauric, myristic, palmitic, stearic, arachidic, behenic, tetracosanoic, and the like. Typical unsaturated fatty acids include palmitoleic, oleic, linoleic, arachidonic, cetoleic, erucic, selacholeic, and the like. Amounts of soap of from about zero percent by weight to about 15 percent by weight or higher of the coating composition, preferably from about 0.5 percent by weight to about 5.0 percent by weight, are suitable.

Various waxes may also be employed as gas release agents. Suitable waxes include various grades of petroleum wax including such usual paraffin waxes as refined slack, sweat, scale, block, and microcrystalline wax.

A preferred system which may be used according to the invention is that which is commercially designated as UCAR® C-34, marketed by Union Carbide. This composition is believed to comprise a mixture of an oil, a soap finely-divided carbonaceous particles, furfuryl alcohol, a phenolic resin of the novolac type, and a hardening agent for the phenolic resin. The mixture of the oil, finely-divided carbonaceous particles, phenolic resin, and phenolic resin hardener can be prepared by blending the carbonaceous particles, phenolic resin and phenolic resin hardener together in any conventional manner, e.g. in a tumbling barrel, spraying the oil into the resulting mixture, and further blending the mixture until

the oil has been incorporated therein and a substantially homogeneous blend formed. The mixture of soap and furfuryl alcohol can be prepared by heating the soap up to a temperature of about 100°C to liquify it, and then dissolving the molten soap in the furfuryl alcohol. Upon cooling, the soap remains dissolved in the furfuryl alcohol as a stable solution which can be stored until it is ready to be mixed with the mixture of oil, finely divided carbonaceous particles, phenolic resin, and phenolic resin hardener. The two mixtures, one liquid and the other essentially solid, can be readily mixed at room temperature, either manually or mechanically.

Many phenolic resins of the novolac type can be employed in the UCAR® C34 cement. Such resins are produced by condensing phenols, such as phenol itself, m-cresol, p-cresol, o-cresol, 3,5-xylenol, 3,4-xylenol, 2,5-xylenol, p-ethylphenol, p-tert-butylphenol, p-amylphenol, p-tert-octylphenol, p-phenylphenol, 2,3,5-trimethylphenol, resorcinol, and the like, with aldehydes such as formaldehyde, furfuraldehyde, acetaldehyde, and like. In practice, an unsubstituted phenol-formaldehyde resin may be employed for cost considerations. Curing of the novolac resin to the thermoset state can be effected by means of any hardening agent conventionally employed to cure such resins. Such hardening agents are conventionally materials such as paraformaldehyde, furfural, or hexamethylenetetramine, with appropriate catalysts when necessary, which upon the application of heat generate aldehydes which react with the resin and cause it to cross-link. The novolac resin is suitably employed in the UCAR® C-34 cement in an amount of from about 0.5 percent by weight of the coating composition to about 15 percent by weight, most preferably from about 2.5 percent by weight to about 8 percent by weight. The hardener for the resin is employed in an amount sufficient to cure such resin to the thermoset state, i.e., in an amount which will provide at least sufficient formaldehyde to react with and cross-link the resin, and provide sufficient alkaline catalyst for the reaction.

Many forms of finely-divided carbon or graphite can be employed as components of the UCAR® C-34 carbonaceous cement. Suitable carbonaceous materials include graphite flour, petroleum coke flour, pitch coke flour, calcined lampblack flour, thermatomic black (made by the passage of natural gas over hot refractories), and the like. Amounts of the carbonaceous flour of from about 1 percent by weight of the coating composition to about 60 percent by weight, preferably from about 10 percent by weight to about 40 percent by weight, are suitable. Most preferably, the carbonaceous flour is a mixture of graphite and thermatomic black, with the graphite flour being present in an amount of from about 2 percent by weight to about 50 percent by weight and the thermatomic black being present in an amount of from about 0.5 percent by weight to about 25 percent by weight.

Suitably, furfuryl alcohol is employed in UCAR® C-34 cement, and may be present in an amount of from about 2 percent by weight of the coating composition to about 40 percent by weight, most preferably from about 4 percent by weight to about 20 percent by weight.

Additional suitable carbon cements are commercially available, such as UCAR® C-38, (Union Carbide), a composition very similar to UCAR® C-34 but containing an oxidation inhibitor; Stebbins AR-25-HT, a furane resin composition comprised of furfuryl alcohol, partially polymerized furfuryl alcohol in forms such as difurfuryl ether, and a latent catalyst which could be phthalic anhydride or a derivative thereof; Stebbins AR-20-C, comprising a partially polymerized furane resin in forms such as difurfuryl ether, together with furfuraldehyde, and a latent catalyst which could be phthalic anhydride or a derivative thereof; and Atlas CARBO-KOREZ, a phenolic resin composition comprising a phenolic novolac or resole resin in a solvent as mix liquid, cured by combination with a phenolic novolac in the solids. The solvent is probably an aliphatic alcohol such as butyl alcohol. Other suitable carbon cements include Atlas CARBO-ALKOR, comprising furfuryl alcohol monomer and partially polymerized forms such as difurfuryl ether and a latent catalyst which would be phthalic anhydride or a derivative thereof; DYLON GC, comprising furfuryl alcohol as solvent and monomer which cures together with a phenol formaldehyde and hexamethylenetetramine hardener; and Aremco GRAPHI-BOND® 551-R, comprising furfuryl alcohol and a latent catalyst.

The coating composition may be applied to the cathode of an aluminum cell as single or multiple layers. A multiple layer coating system may provide a stronger bond, due to greater penetration of the pore structure of the carbon cathode by a first bonding layer which does not incorporate $TiB_2$, and permits easier and more rapid cure of the coating. Further, the use of plural layers may also reduce the size and number of shrinkage cracks in the $TiB_2$-containing top layer. In still another preferred embodiment, the coating composition may typically comprise up to about 10 percent by weight of carbon fiber, which acts to inhibit crack formation, strengthen the coating, and lessen any tendency for exfoliation of the coating, particularly at any point of contact with the bath. The carbon cement that is applied to the cathode substrate as a bonding layer may contain up to 40 percent extra carbonaceous filler and additive, which help to prevent cracking of the substrate due to stress forces encountered during curing and carbonization of the coating, by modifying the strength of the bond between the substrate and the bonding layer, and the properties of the bonding layer.

The coated cathodes disclosed herein may be successfully utilized in conventional aluminum cells or in cells in which the anode and cathode are sloped from the horizontal. Such aluminum cells are suggested in prior art references such as Lewis et al U.S. 3,400,061; Holliday, U.S. 3,661,736; and Payne U.S. 4,093,524. Such configurations have the purported advantage of ready drainage of the aluminum so that there is only a thin film of aluminum upon an aluminum wetted cathode surface, thus permitting much narrower anode

to cathode distances. Past attempts to achieve commercially acceptable coated sloped cathodes, or RHM tile surfaces for cathodes, however, have been unsuccessful.

In addition, the concept disclosed herein is also applicable to aluminum reduction cells wherein non-consumable anodes are employed. Such anodes may consist of porous electronic-conducting material, such as platinum black, separated from the molten electrolyte by a ceramic oxygen-ion conducting layer which is non-permeable to and resistant to the electrolyte. The oxygen ions are conducted through the oxide layer and are discharged at the anode with the formation of oxygen gas. Such anodes are disclosed in Marcinek, U.S. Patent 3,562,135.

In U.S. Patent 3,578,580 of Schmidt-Hatting and Huwyler, anodes based upon similar principles, but including either molten silver or an auxiliary electrolyte such as molten PbO, and a solid electrical conductor or platinum, are disclosed. Anodes based upon $SnO_2$ are disclosed in Klein, U.S. Patent 3,718,550; and Adler, U.S. Patents 3,930,967, 3,960,678 and 3,974,046. In addition, De Nora et al have disclosed, in U.S. Patent 4,098,669, the use of sintered electrodes with a matrix of $Y_2O_3$ and other compounds with electronic conductivity and with electro-catalytic material on the surface. More complex oxide anodes for Hall-Heroult aluminum electrolysis, based on spinel, perovskite, delafossite, pyrochlore, scheelite and rutile structures oxides with electronic conductivity, and mixtures of these, are disclosed in patents to Yamada et al, U.S. 4,039,401, British 1,508,876, Japan Kokai 77.140,411 (1977) and Japan Kokai 77.153,816 (1977).

The advantages of inert anodes are smaller ACD and more compact cell design, having lower heat loss. While inert anodes to date have shown an initial electrical energy requirement disadvantage relative to consumable carbon anodes, inert anodes would have less irregular surfaces, and considerably longer life spans, thus avoiding the necessity for changing anodes frequently, with the accompanying disturbance of cell operating conditions.

Such anodes may be utilized in conjunction with cathodes having aluminum wettable surfaces, as disclosed herein, with advantages such as narrowed ACD gaps, and extended life. Further advantage may be anticipated from the use of such anodes in combination with sloped, or drained, cathodes having RHM-carbon coated surfaces as taught herein.

It is also contemplated that the cell set forth by the present invention may encompass a substantially thinner carbon cathode block than those presently employed in conventional aluminum cells. In view of the potential for extended coating life available, the necessity for thick cathode blocks is reduced, resulting in a reduction of temperature of the conducting medium employed, and substantial cost reduction and power savings. Further, it is contemplated that cells of the present invention could utilize noncarbonaceous cathode substrates, protected by the aluminum wettable RHM surface layer disclosed herein.

The improved operation of full-scale (105K amp) VSS aluminum reduction cells constructed with coated cathodes in accordance with this invention continues to demonstrate the productivity improvements resulting from this invention. While the examples below illustrate the preferred specifications of the improved coating composition and process, it is possible to obtain a viable coating by many similar procedures. The examples were prepared by coating the cathode blocks prior to their assembly on the collector bars and the cell ramming process. In commercial practice, it is possible that an in-cell coating would be used to coat all or part of the bottom and side wall surfaces of a rammed cathode. The entire cathode coating could then be cured and carbonized in a single operation using, for example, a hooded heater placed over the coated rammed cathode. This could result in economies in time and coating costs and provide a fully monolithic cathode without ram joints, as well as reducing bake-in emissions and improving the baking process to give an improved baked ram in the slots and sidewalls.

The coating composition can be applied to each cathode block, cured, and carbonized before being set into position. Alternatively, the cathode can be assembled and rammed, the coating applied and then cured. The carbonization process would occur in the cell in this case. Curing may be accomplished in stages, whereby the coated substrate is gradually raised to the desired curing temperature at which a relatively hard surface is obtained, followed by carbonization at temperatures up to 1100°C. In the initial states of such curing, volatile components, such as the mix liquid volatiles and reaction products are removed, while a higher temperatures, e.g. 250°C to 1100°C, carbonaceous materials, such as cross-linked phenolic resin, are decomposed to leave a non-graphitizing carbonaceous matrix containing RHM. This carbonization step may be carried out directly after the initial cure by heating the coated carbon substrates to the desired temperature, or subsequent to said cathode substrate being placed in the electrolytic cell. Alternatively, the carbon cathode blocks may be placed in position in the cell after coating and initial curing, followed by "bake-in" of the coated cathode by cell start-up and operation. Alternative orders of coating, curing, carbonizing, assembling, setting, and ramming may of course be utilized.

The area coated may range from the entire inner surface of the cathode cavity to less than 10 percent of the cathode surface below the anode or anodes. The area to be coated ranges from 50 to 100 percent of the cathode surface directly below the anode or anodes, with the preferred area ranging from 70 percent to 100 percent of said area. It may, however, be desirable to leave some uncoated area, to permit cathode ram degassing during cell heat-up and start-up, for example.

The RHM coating need not be continuous over the entire cathode surface. In the case of $TiB_2$ tiles, small gaps between adjacent tiles (1 mm to 5 mm) will be bridged by the molten metal. Similarly, $TiB_2$ particles in a carbon surface at an appropriate concentration will produce a pseudo-continuous aluminum wetting film

by bridging between adjacent $TiB_2$ particles. In the case of the coating composition of this invention, 20 weight percent $TiB_2$ in the surface will produce a pseudo-aluminum wetted surface. A preferred overall content of $TiB_2$ in the surface layer of 35—60 weight percent will allow for mixing inhomogeneities and a longer coating life. Modification of the RHM particle properties and/or changing the coating formulation and/or the RHM distribution within the coating may enable the use of lesser amounts of RHM. Cracks in the coating should be less than 5 mm in width, preferably less than 1 mm wide.

Two different types of $TiB_2$ powder have been used in the test cells. No difference could be detected in the mixing and coating procedures when the high purity (+99.5%) $TiB_2$ was replaced by less pure (98%) material. A carbothermic process was used to produce the high purity powder while an arc melting process was used to produce the lower cost, less pure powder.

While no minimum or maximum coating thickness has yet been defined, thicker coatings provide longer coating life. However, the tendency is greater for crack formation and higher coating costs with thicker coatings. The preferred coating thickness is from about 1 cm to about 1.6 cm to minimize the tendency for blister formation or crack formation in the coating during cure and carbonization. Maximum coating thickness should be consistent with anticipated cell life; i.e. there is no need to have a coating thickness to last 10 years if cell life is anticipated to be only 7 years.

It is also contemplated that the coating compositions may be applied as a single layer or as of a plurality of layers, which layers may be individually cured between applications. In accordance with this concept, it is possible to produce a substantial coating thickness (e.g. 5 cm or more) by successively applying thin layers of coating composition and curing such layers individually. For greatest bonding strength, it may be desirable to treat the surface of each cured layer, by scuffing or wire brushing, for example, prior to application of the next layer. It is also possible, by this technique, to obtain a graduated RHM content within the coating, by changing the RHM concentration in successive layers of coating composition.

The general procedure used to coat individual cathode blocks, assemble the cathodes, and cut-in cells is summarized below.

1. Wire brush and vacuum clean the top surface of the cathode blocks.
2. Attach mold around the top of each block.
3. Mix dry coating components.
4. Preheat coating materials and blocks.
5. Mix the coating composition.
6. Apply a thin coating and work it into the block surface.
7. Complete application of coating and use a bar to level coating with top of mold.
8. Wait 15—30 minutes before using a metal trowel to semi-smooth the coating surface.
9. Insert a thermocouple in the side of the coating and place coated blocks in cure oven.
10. Cure.
11. Remove coating molds from the blocks.
12. Place the cured blocks in a metal box, cover with coke and heat to partially carbonize.
13. Cool the blocks before removing them from the coke bed.
14. Cast the blocks on collector bars.
15. Ram the collector bar assemblies in cathode shell and ram side walls.
16. Wire brush excess ram off the coated block surface.
17. Follow conventional procedures for cathode installation, bake and cut-in.

The uniformity, workability and bonding properties of the coating are strongly influenced by temperature. The preferred premixing temperatures of the mix liquid and solid portions of the coating composition are 40—45°C and 30—35°C, respectively. A premixing temperature range of 20—45°C has been used for the mix liquid and solid components without any severe problems. The temperature of the cathode block or surface to be coated should be between 20°C and 65°C, preferably between 40°C and 50°C.

A low premixing temperature resulted in non-uniform mixing and the need to add more solvent to make the coating workable. Both produced small blisters in the coating. A high premixing temperature caused a partial premature curing of the coating which resulted in poor workability and poor bonding to the carbon substrate.

A low block temperature made it difficult to uniformly spread the coating and achieve the required wetting of the carbon substrate necessary for good bonding. A high block temperature caused partial premature curing and excessive shrinkage in the coating. Excessive shrinkage increased the tendency for crack formation and delamination from the carbon substrate.

As indicated, certain ranges of generally acceptable temperatures for preheat treatment of the coating composition and the cathode blocks exist. It is also noted that coating thickness may vary from approximately 0.6 cm to 1.6 cm or higher. Preferred ranges are set forth in Table I.

TABLE I
Application parameters

| Item | Ranges: Acceptable | Ranges: Preferred |
|---|---|---|
| Preheat dry components prior to mixing | 20—45°C | 30—35°C |
| Preheat liquid component prior to mixing | 20—45°C | 40—45°C |
| Preheat cathode blocks prior to coating | 20—65°C | 40—50°C |
| Coating thickness | 0.6—1.6 cm | 1.0—1.3 cm |

Thermogravimetric analysis has revealed two critical temperature ranges in the curing process for some coating formulations. Thus, in experiments with multiple component coating composition with plural reactions occurring, two principal regions of volatile release were noted. The first loss of volatiles occurred at about 100°C, and it may be desirable to hold at this temperature for sufficient time (e.g. about 3 to 4 hours) to achieve full initial volatile release. The coating should then be slowly heated to about 135°C—150°C, in which region additional volatiles are released. Because of the presence of this second period of volatile release, it is important that temperatures be raised slowly in this range so as to avoid formation of blisters or spalling as further gases are released. If the cure temperature is increased too rapidly, large blisters develop in the coating. On a number of occasions, blisters occurred in the coating when equipment failures caused an actual cure cycle to deviate by approximately 15°C from that given. A deviation of ±5°C from the preferred cure cycle is acceptable. The properties of an acceptable cured coating are: 1) hardness; 2) freedom from blisters; 3) minimal vertical and horizontal cracks; 4) a sharp ring when struck by a steel hammer; and 5) good bonding to the cathode block, particularly at the corners.

Although specific temperature points are noted in the examples, it is clear that cure cycle temperatures may be varied to meet the requirements of specific compositions. For example, changes in mix liquid may require different initial heating periods.

In general, heating to an initial temperature of about 100°C in a period of 1 hour, and holding at this temperature for a period of 3 to 4 hours result in good "set-up" of the composition, and release of initial volatile reaction products and volatile mix liquid, after which, elevation of the temperature to a suitable curing temperature such as 165°C may be done gradually.

Carbonization may be conducted immediately after curing, or at a subsequent time, as when the cured coated cathode block is assembled in a cell and carbonized therein by a coke-bed heating procedure followed by normal cell bake-in. It is noted, however, that during carbonization, just as during cure, slow temperature elevation is desirable so as to avoid sudden release of remaining volatiles and/or carbonization products.

As indicated previously, the coating passes through various stages during curing and carbonization, in which it is cured to a relatively hard resin state at temperatures below about 250°C, and carbonized at temperatures between 250°C and about 800°C. It is noted, however, that after heating at a temperature of about 250°C for sufficient time to effect polymerization and/or cross-linking and evolution of volatiles and volatile reaction products, the coating retains a degree of dimensional yield or ability to accommodate thermal expansion or contraction of the cathode substrate.

Test samples were coated and left to air dry for different periods of time (0—24 hours) before initiating the cure cycle. Severe blistering occurred when initiation of the cure cycle was delayed more than 8 hours. It is preferred to start the cure cycle within 4 hours of preparation of the coating composition, since air drying causes a film to form on the surface of the coating, which inhibits the subsequent release of gas during the cure cycle and increases the tendency to form blisters.

A coke bed/coating resistance test apparatus was used to compare the resistance of a cured coated cathode with that of an uncoated cathode during the cell bake-in process. Experimental data show that the high electrical resistance of the cured coating can be decreased by heating the coating for 3 hours at 550°C—600°C. The heating process starts to carbonize the resinous binder used and, consequently, reduces the coating electrical resistance. Laboratory tests indicate that a resistive thin film of cured resinous binder forms on the top surface of the coating during the cure cycle, which can be removed by vigorous wire brushing or by grit blasting the coating surface either before or after the carbonization process.

A high coating resistance will cause an overload on the shunt machines used during commercial cell bake-in. Moderate coating resistance will cause local heating within the coating and a reduction in coating resistance. Once heated to 900°C—1000°C, the coating resistance is equivalent to that of a graphite cathode block.

After curing, 16 coated cathode blocks were inserted and covered with coke in a metal box and baked in a furnace, slowly heated to about 250°C over a 30-hour period, and heated to about 600°C in about 18 hours thereafter. No difficulties related to coating resistivity were encountered during bake-in of test cells utilizing these blocks.

Laboratory wettability tests revealed that a carbonized coating is covered with a film which inhibits the aluminum from wetting the coating surface. Heavy wire brushing of the coating prior to the electrolysis wetting test only increased the aluminum wetted area to 50 percent. Exposure of the coating at 900°C—1000°C to air for 3—5 minutes eliminates the non-wetting film, and the coating was wetted over more than 95 percent of its area in the wetting test. Prolonged exposure to the bath will also promote aluminum wetting of the coating. The normal removal of the coke bed during cell cut-in provides sufficient air burn of the surface to ensure good initial wetting of the coating by the aluminum metal. Delay of metal additions to the cell containing bath will also aid in cleansing of the surface by prolonging bath contact.

The tendency for blister formation in the coating was affected by the degree and technique used to finish the top surface of the applied wet coating. A finished smooth surface achieved by either dry or wet working the coating surface exhibited a greater tendency to form blisters than a rough trowelled surface. A smooth surface promoted the rapid formation of a film, which sealed the surface and interfered with the release of blister forming gases evolved during curing. Conversely, the imperfections in the partially smoothed surface promoted the release of gas during the cure cycle. Blister-free coatings can thus be conveniently achieved by only partially smoothing the surface of the wet coating.

The surface texture of different finishes on coatings prepared from an experimental coating composition has also been characterized. The technique in this instance was to take a 2 cm×2 cm×2 cm sample of coated block and mount this in epoxy resin filled with white powder to achieve a white background against the black coating. The mounted specimen was then sectioned and polished to reveal the detailed profile of the coating surface. This was photographed at 12× magnification and the outline of the coating surface traced onto plain paper. "Typical" 5 mm sections of this profile were then analyzed in terms of a maximum peak-to-valley height and the average calculated. Values of these measurements are set forth in Table II.

TABLE II
Coating roughness for experimental coating

| Surface finish | Average peak-to-valley height taken on typical 5 mm lengths of coating surface |
|---|---|
| unfinished | 1.25 mm |
| semi-smoothed | 0.74 mm |
| fully-dry smoothed | 0.62 mm |
| fully-wet smoothed | 0.26 mm |

It was noted that coated cathodes which were given a fully-dry or fully-wet smooth finish exhibited blistering, whereas those given to a semi-smooth finish resulted in acceptable coating. Accordingly, it may be speculated that a surface texture having average peak-to-valley heights of less than about 0.65 mm is to be avoided.

The high porosity of graphite particles (UCAR® BB-6) or other equivalent porous aggregate enhanced the escape of solvent and other gases during the cure and carbonization cycle, compared to that of regular coke material such as UCAR® 6-03 coke. Addition of a porous aggregate to the coating reduced the tendency to form blisters and the amount of coating shrinkage during curing. Excessive shrinkage weakens the coating-substrate bond strength and enhances crack formation.

Example 1: Char yield

Accurately known weights of mix liquid and solid components of various carbon systems were mixed in a Teflon® coated mold having dimensions 5.1 cm×1.27 cm×0.63 cm deep. When the system comprised a separate hardener, the weight of hardener was included with the mix liquid weight. Each carbon system was taken through the usual cure cycle, then weighed and removed from the mold. The cured piece was then heated to constant weight in an alumina crucible at 250°C in air, and the weight corrected for any loss which might have occurred in removing the piece from the mold (e.g., breakage, dusting or adhesion to the mold). The extrapolated weight was thus the "true" weight that the sample would have attained at 250°C in the absence of physical manipulation. The piece was then sintered to 1000°C over a period of 24 hours in an alumina crucible under an Argon atmosphere. After furnace cooling, the sample was weighed, and the weight again corrected to correspond with the original weight of composition (rather than the weight used in the sintering phase). The adjusted char weight thus represents the total char weight resulting from the original sample.

An accurately determined weight of the original solids was extracted with boiling methyl ethyl ketone (MEK) in a soxhlet extraction apparatus for 4 hours, or longer if the extract continued to emerge colored after that time. The weight of extracted material was determined by evaporating the pregnant solvent to dryness (at least 24 hours) in a tall glass beaker held in a vacuum oven at ambient temperature. The weight increase over that of the empty beaker was taken as the weight of extracted material. This was

cross-checked with the weight of insoluble solids remaining in the soxhlet extraction thimble (similarly evaporated to dryness and constant weight under vacuum).

The weight of MEK insolubles in the original carbon system is then computed from the known weight of solids originally present and the percentage of those solids which comprise the MEK insolubles. These solids were assumed not to undergo any weight loss to 250°C. Thus, the weight of "resin" (in this case defined as everything apart from MEK insolubles in the carbon system cured to 250°C) in the piece at 250°C is given by the "true" piece weight at 250°C less the weight of MEK insolubles originally present.

The char weight due to the MEK insolubles was determined by sintering the extraction residue from the soxhlet thimble to 1000°C under an Argon atmosphere in an alumina crucible. The resultant char weight was again adjusted to correspond with the actual weight by subtracting MEK insolubles found in the sample initially.

The char weight from the resin was thus the total char weight minus the char weight from MEK insolubles. And the "char yield" was the char weight from the resin as a percentage of the total resin weight in the slug at 250°C.

Results from these measurements are as follows:

TABLE III
Char yield

| Carbon system | Char yield of resin | Coating quality |
|---|---|---|
| UCAR® C-34 cement | 71% | Excellent-high density |
| Atlas CARBO-VITROPLAST | 8% | Poor-brittle, porous, spongy |
| Stebbins AR-20-C Cement | 59% | Good-high density |
| Coating composition CM-82* | 94% | Excellent-high density |

* CM-82 has the following formulation:
46.0 weight % $TiB_2$ powder, Carborundum −325 mesh
28.0 weight % UCAR C-34 cement solids
15.8 weight % UCAR C-34 mix liquid
0.2 weight % Great Lakes Carbon FORTAFIL 3, carbon fibers sized for UCAR C-34 cement, 0.32 cm length
10.0 weight % UCAR BB-6 Graphite particles

Example 2 (Comparison)

A polyester resin with carbon filler, marketed as Atlas CARBO-VITROPLAST carbon cement, was mixed with 35 percent $TiB_2$ to form a coating composition (CM-92). The coating composition exhibited good workability, good fluidity, was not sticky, and was easily spread upon a cathode substrate.

The coated substrate was cured by heating to 100°C in 1 hour, holding at 100°C for 3 hours, heating to 165°C in 1 hour, holding at 165°C for 10 hours, heating to 200°C in 1 hour, holding for 1/2 hours, and air cooling. The cured coated exhibited excellent bonding to the substrate, excellent density, and no surface defects. The coated substrate was then subjected to carbonization by heating to 1000°C in an argon atmosphere over a 24-hour period. The carbonized coated exhibited complete debonding, with the coating complete but having extensive fine porosity. The coating displayed no surface defects, but was very light and powdered easily. It is noted that the resinous binder utilized in the preparation of this coating composition exhibited a char yield of only 8 percent, illustrating the criticality of this parameter.

Example 3 (Comparison)

A coating composition was prepared utilizing 45% $TiB_2$ and 55% Aremco GRAPHI-BOND® Grade 551-R, which is believed to comprise 32 percent graphite, and 68 percent alumino-sodium silicate. The coating composition was very fluid, and poured rather than spread. The coated substrate was cured by elevating the temperature from room temperature to 100°C in a 1-hour period. Holding 4 hours, heating to 135°C in 1 hour, holding at 135°C for 4 hours, heating to 150°C in 1 hour, holding at 150°C for 12 hours, heating to 165°C in 1 hour, and holding for 3 hours at 165°C, following by cooling in air.

A huge blister developed within the coating after 4 hours at 100°C. A good bond was formed, although the coating was extremely porous. After carbonization, the coating appeared visably unchanged, but it had become more brittle and crumbly, and slight debonding was evident near the edges. This example illustrates a coating composition which is unsuitable in the present invention.

Example 4

An intractable (infusible) polyphenylene polymer is prepared by polymerization of 1,3-cyclohexadiene

with Ziegler-Natta catalysts followed by halogenation and dehydrohalogenation. This produces a para-phenylene polymer with a molecular weight of about 4,000. This resin alone is unsuitable for use in the present invention because of the relatively low molecular weight and relative insolubility.

A fusible polyphenylene resin (soluble, for example, in trichlorobenzene) is prepared by cationic oxidative polymerization of 1,3,5-triphenylbenzene. The reaction product contains intractable polyphenylene by-product which is removed by fractional distillation. The distilled fusible polyphenylene has a molecular weight between 1000 and 1500.

A coating composition is prepared utilizing these two resins, as follows. The two resins are ground separately to −325 mesh and then mixed thoroughly for 15 minutes in a high speed blender, in the ratio 1.6 percent (by weight of the coating composition) intractable polyphenylene to 3.3 percent fusible polyphenylene. To this mixture is then added 16.3 percent graphite flour (UCAR® GP 38 P) and 8.2 percent REGAL® 400 pellets (carbon black from Cabot Corporation).

A mix liquid is prepared containing 1.6 percent of triethanol amine (TEA) oleate and 11.4 percent of chloroform. The TEA oleate is first heated to a liquid state by warming to 100°C and then pouring into the chloroform.

To the dry components (comprising the polyphenylene resin powders, graphite powder and carbon black) are now added 47.3 percent Carborundum −325 $TiB_2$, 9.8 percent Union Carbide UCAR® BB-6 graphite aggregate and 0.5 percent Great Lakes Carbon FORTAFIL® 0.32 cm sized fiber. The ingredients are dry blended and the mix liquid added until a uniform dispersion of the ingredients is observed.

The coating composition is spread onto a cathode block in the usual manner to form a 0.95 cm thick layer. This block is then left in air for 1 hour to allow some of the solvent to evaporate. Curing is achieved by slowly heating the coated block to 70°C to volatilize most of the mix liquid, followed by slow heat to 80°C and holding at this temperature for 2 hours. Again the temperature is slowly raised to 200°C and held for 8 hours. The block is then cooled to room temperature.

A partial carbonization is then effected by heating for 9 hours at 135°C, followed by 24 hours of slow temperature elevation to 300°C and holding at 300°C for 6 hours. A satisfactory coating results.

The mesh numbers referred to above correspond to sieve openings as follows:—

| Mesh No. | Opening |
|---|---|
| 4 | 4.699 mm |
| 8 | 2.362 mm |
| 10 | 1.651 mm |
| 20 | 833 μm |
| 100 | 147 μm |
| 325 | 43 μm |

**Claims**

1. A cell for the electrolytic reduction of alumina to aluminum, having a cathode comprising a cathode substrate with an aluminum wettable surface layer bonded thereto, said layer comprising Refractory Hard Material in a non-graphitized carbon matrix having a rate of ablation during operation of said cell substantially equal to the combined rate of wear and dissolution of said Refractory Hard Material, said surface layer exhibiting an expansion between 800°C and 1000°C of less than 0.2 percent, and being obtained by curing and carbonizing a coating comprising: Refractory Hard Material; thermosetting resinous binder comprising a non-graphitizing thermosetting resin other than a phenolic resin, a furane resin precursor or a mixtures thereof; mix liquid; particulate carbonaceous filler having a particle size of less than 100 mesh; and carbonaceous additive in the form of particulate material having a particle size greater than 100 mesh and/or carbon fibers.

2. A cell according to claim 1, wherein said Refractory Hard Material comprises titanium diboride.

3. A cell according to claim 2, wherein said surface layer is obtained by curing and carbonizing a coating comprising from about 10 to about 90 percent titanium diboride, from about 1 to about 40 percent resinous binder, from about 2 to about 40 percent mix liquid, from about 1 to about 60 percent carbonaceous filler, up to about 70 percent carbonaceous additive, and effective amounts of curing agent and gas release agent.

4. A cell according to any one of the preceding claims wherein the thermosetting resinous binder additionally contains one or more phenolic resins, furane resin precursors or mixtures thereof.

5. An aluminum reduction cell having cathode and anode surfaces inclined from the horizontal, wherein said cathode surface comprises a non-graphitized carbon matrix having Refractory Hard Material therein, said surface exhibiting a rate of ablation during operation of said cell such that said carbon matrix and said Refractory Hard Material are removed at substantially the same rate, wherein said cathode surface comprises a cathode substrate having an adherent layer of a cured and carbonized coating obtained by curing and carbonizing a composition comprising: Refractory Hard Material; a thermosetting resinous binder system containing non-graphitizing thermosetting resins other than phenolic resins, furane resin precursors and mixtures thereof; particulate carbonaceous filler having a particle size of less than 100

mesh; and carbonaceous additive in the form of particulate material having a particle size greater than 100 mesh and/or carbon fibers.

6. A cell according to claim 5, wherein said Refractory Hard Material is titanium diboride, and said resinous binder system exhibits a char yield of greater than 50 percent.

7. A cell according to either of claims 5 and 6, wherein said coating exhibits a percentage of expansion between 800°C and 1000°C which differs by less than 0.2 from the percentage of expansion exhibited by said cathode substrate.

8. A cell according to any one of claims 5 to 7, wherein said composition comprises from about 20 to about 70 percent by weight titanium diboride, from about 0.5 to about 15 percent resinous binder, from about 2 to about 40 percent mix liquid, from about 1 to about 60 percent carbonaceous filler, up to about 70 percent carbonaceous aggregate having a particle size between −4 and +100 mesh, from about 0.5 to about 1.0 percent carbon fiber, and effective amounts of curing agent and gas release agent.

9. A cell according to any one of claims 5 to 8 wherein the thermosetting resinous binder additionally contains one or more phenolic resins, furane resin precursors or mixtures thereof.

10. A coating composition comprising: a Refractory Hard Material; a thermosetting binder system containing non-graphitizing thermosetting resins other than phenolic resins, furane resin precursors and mixtures thereof; particulate carbonaceous filler having a particle size of less than 100 mesh; and carbonaceous additive in the form of particulate material having a particle size greater than 100 mesh and/or carbon fibers; wherein said thermosetting binder system exhibits a char yield greater than 25 percent, and said binder system, carbonaceous filler and carbonaceous additive exhibit an ablation rate after curing and carbonization substantially equal to the combined rate of wear and dissolution of said Refractory Hard Material in the environment of an aluminum reduction cell during operation thereof.

11. A coating composition according to claim 10, wherein said Refractory Hard Material is titanium diboride, and comprises from about 10 to about 90 percent by weight of the coating composition.

12. A coating composition according to any one of claims 8 to 10, wherein said binder system comprises a resinous binder selected from polyphenylene, heterocyclic, epoxy, silicone, alkyd, and polyimide resins, and mixtures thereof, and wherein said Refractory Hard Material is selected from single crystal, bicrystal, and open clusters of single crystal titanium diboride.

13. A coating composition according to any one of claims 10 to 12, wherein the thermosetting binder system additionally contains one or more phenolic resins, furane resin precursors or mixtures thereof.

14. A coating composition comprising: a Refractory Hard Material; a thermosetting resinous binder comprising a non-graphitizing thermosetting resin other than a phenolic resin, a furane resin precursor or a mixture thereof; mix liquid; particulate carbonaceous filler having a particle size of less than 100 mesh; and carbonaceous additive in the form of particulate material having a particle size greater than 100 mesh and/or carbon fibers; wherein said resinous binder, mix liquid, carbonaceous filler and carbonaceous additive have an ablation rate, after cure and carbonization, substantially equal to the combined rate of wear and dissolution of said Refractory Hard Material in an aluminum cell environment during operation of the cell.

15. A coating composition according to claim 14 which exhibits an expansion between 800°C and 1000°C of less than 0.2 percent.

16. A coating composition according to claim 14 which exhibits an expansion of less than 0.2 percent between 800°C and 1000°C, and an overall contraction of less than 1.0 percent upon cycling from 20°C to 1000°C to 20°C.

17. A coating composition according to any one of claims 14 to 16 wherein said carbonaceous filler has a C:H ratio greater than 2:1.

18. A coating composition according to any one of claims 14 to 17 wherein said carbonaceous additive is selected from carbon aggregate having a particle size between about −4 mesh and about +100 mesh, carbon fiber, and mixtures thereof, and comprises from about 5 to about 15 percent of the coating composition.

19. A coating composition according to any one of claims 14 to 18 wherein the thermosetting resinous binder additionally contains one or more phenolic resins, furane resin precursors or mixtures thereof.

20. A composition for coating aluminum cell cathode surfaces, which composition comprises: from about 20 to about 70 percent by weight Refractory Hard Material; from about 1 to about 40 percent thermosetting resinous binder comprising a non-graphitizing thermosetting resin other than a phenolic resin, a furane resin precursor or a mixture thereof; from about 2 to about 40 percent mix liquid; from about 10 to about 40 percent particulate carbonaceous filler having a particle size of less than 100 mesh; from about 5 to about 15 percent carbonaceous additive in the form of particulate material having a particle size greater than 100 mesh and/or carbon fibers; and effective amounts of gas release agent and curing agent; wherein said resinous binder and mix liquid exhibit a char yield greater than about 50 percent.

21. A coating composition according to claim 20, wherein said coating composition has an expansion of less than 0.2 percent between 800°C and 1000°C, and an overall contraction of less than 1.0 percent when cycled from 20°C to 1000°C to 20°C.

22. A coating composition according to either of claims 20 and 21 wherein said Refractory Hard Material comprises single crystal titanium diboride.

23. A coating composition according to anyone of claims 20 to 22 wherein the thermosetting resinous binder additionally contains one or more phenolic resins, furane resin precursors or mixtures thereof.

24. A method for producing an aluminum wettable cathode surface for an aluminum reduction cell, which method comprises applying to a cathode substrate a coating composition comprising: Refractory Hard Material; a thermosetting resinous binder comprising a non-graphitizing thermosetting resin other than a phenolic resin, a furane resin precursor or a mixture thereof; a mix liquid; particulate carbonaceous filler having a particle size of less than 100 mesh; and carbonaceous additive in the form of particulate material having a particle size greater than 100 mesh and/or carbon fibers; curing said coating composition to produce a relatively hard, adherent surface layer, and carbonizing said layer to produce an adherent aluminum wettable surface layer consisting of Refractory Hard Material in a non-graphitized carbon matrix, said surface layer having a percentage of expansion between 800°C and 1000°C which differs from the percentage of expansion of said cathode substrate by less than 0.2.

25. A method according to claim 24, wherein said coating composition is applied to carbon cathode blocks external to said cell, and cured prior to placement in said cell.

26. A method according to claim 25, wherein said coating composition is carbonized prior to placement in said cell.

27. A method according to claim 25, wherein said coating composition is carbonized in said cell.

28. A method according to claim 24, wherein said coating composition is applied to carbon cathode blocks external to said cell, and then cured and carbonized in said cell.

29. A method according to claim 24, wherein said coating composition is applied to the cathode substrate within said cell, and then cured and carbonized.

30. A method according to any one of claims 24 to 29, wherein said coating composition is applied onto a bonding layer.

31. A method according to any one of claims 24 to 30, wherein said coating composition is applied in a plurality of layers.

32. A method according to any one of claims 24 to 31, wherein said Refractory Hard Material comprises titanium diboride.

33. A method according to claim 32 when dependent on claim 32, wherein the titanium diboride content changes in successive layers.

34. A method according to any one of claims 24 to 33 wherein the thermosetting resinous binder additionally contains one or more phenolic resins, furane resin precursors or mixtures thereof.

35. An aluminum wettable cathode for an aluminum cell, comprising a cathode substrate, a non-graphitized carbon surface, and Refractory Hard Material, said Refractory Hard Material being contained within the matrix of said carbon surface, said carbon surface resulting from the carbonization of a coating comprised of a non-graphitizing thermosetting resin selected from polyphenylene, heterocyclic, epoxy, silicone, alkyd, and polyimide resins, and mixtures thereof, mix liquid, particulate carbonaceous filler having a particle size of less than 100 mesh, and carbonaceous additive in the form of particulate material having a particle size greater than 100 mesh and/or carbon fibers, curing agents, gas release agents, and modifying agents, wherein said carbon surface has an ablation rate substantially equal to the combined rate of wear and dissolution of said Refractory Hard Material in the environment of said aluminum cell during operation thereof.

36. A cathode according to claim 35, wherein said Refractory Hard Material is titanium diboride.

37. A cathode according to claim 36, wherein said titanium diboride comprises from 35 to 60 percent by weight of the coating composition applied to the substrate.

38. A cathode according to either of claims 36 and 37, wherein said titanium diboride is selected from single crystal titanium diboride, bicrystal titanium diboride, and open clusters of single crystal titanium diboride.

39. A cathode according to any one of claims 35 to 38 wherein the thermosetting resins additionally contains one or more phenolic resins, furane resins or mixtures thereof.

40. A method for producing an aluminum wettable cathode surface for an aluminum reduction cell, which method comprises applying to a cathode substrate a coating composition comprising: Refractory Hard Material; a thermosetting resinous binder comprising a non-graphitizing thermosetting resin other than a phenolic resin, a furane resin precursor or a mixture thereof; a mix liquid; particulate carbonaceous filler having a particle size of less than 100 mesh; and carbonaceous additive in the form of particulate material having a particle size greater than 100 mesh and/or carbon fibers; curing said coating composition at a temperature below 250°C for sufficient time to effect polymerization, cross-linking and evolution of volatile materials, and further heating the cured coating composition at a temperature sufficient to effect carbonization thereof without graphitization of said resinous binder.

41. A method according to claim 40, wherein said cathode substrate is preheated to a temperature of from about 20°C to about 65°C prior to application of said coating composition.

42. A method according to claim 41, wherein said cathode substrate is preheated to a temperature of from about 40°C to about 50°C prior to application of said coating composition.

43. A method according to any one of claims 40 to 42, wherein the solid portions and the liquid portions of said coating composition are individually premixed at a temperature of from about 20°C to about 45°C.

44. A method according to claim 43, wherein the solid portions of said coating composition are

premixed at a temperature of from about 30°C to about 35°C, and the liquid portions of said coating composition are premixed at a temperature of from about 40°C to about 45°C.

45. A method according to any one of claims 40 to 44, wherein the cured coating is further heated at a temperature of from about 550°C to about 600°C in a coke bed for sufficient time to partially carbonize said coating.

46. A method according to claim 45, wherein said coating is subsequently heated to a temperature of from about 900°C to about 1000°C.

47. A method according to any one of claims 40 to 46 wherein said coating composition is applied to said substrate and curing is commenced within 4 hours of preparation.

48. A method according to any one of claims 40 to 47 wherein the thermosetting resinous binder additionally contains one or more phenolic resins, furane resin precursors or mixtures thereof.

49. An aluminum-wettable cathode for an aluminum reduction cell comprising a cathode substrate having a surface layer, said surface layer being a cured and carbonized composition comprising Refractory Hard Material; thermosetting resinous binder comprising a non-graphitizing thermosetting resin other than a phenolic resin, a furane resin precursor, or a mixture thereof; mix liquid; particulate carbonaceous filler having a particle size of less than 100 mesh; and carbonaceous additive in the form of particulate material having a particle size greater than 100 mesh and/or carbon fibers.

50. An aluminum-wettable cathode according to claim 49 wherein said thermosetting resinous binder additionally contains one or more phenolic resins, furane resin precursors or mixtures thereof.

51. An aluminum-wettable cathode according to either of claims 49 and 50 wherein said Refractory Hard Material is titanium diboride.

52. An aluminum reduction cell comprising a cathode according to any one of claims 49 to 51.

53. An aluminum reduction cell according to claim 52 wherein said cathode is sloped from the horizontal.

**Patentansprüche**

1. Zelle für die elektrolytische Reduktion von Aluminiumoxyd zu Aluminium mit einer Kathode, die ein Kathodensubstrat mit einer damit verbundenen aluminiumbenetzbaren Oberflächenschicht umfaßt, die ein feuerfestes Hartmaterial in einer nichtgraphitisierten Kohlenstoffmatrix umfaßt, welche während des Betriebs der Zelle eine Abtragungsrate aufweist, die im wesentlichen der kombinierten Verschleiß- und Auflösungsrate des feuerfesten Hartmaterials gleich ist, wobei die Oberflächenschicht zwischen 800°C und 1000°C eine Ausdehnung von weniger als 0,2% aufweist und durch Aushärten und Karbonisieren einer Beschichtung mit folgenden Bestandteilen erhalten worden ist:

—feuerfestes Hartmaterial;

—ein warmaushärtender Harzbinder, welcher ein nichtgraphitisierendes warmaushärtendes Harz umfaßt, welches kein Phenolharz, kein Furanharz-Vorprodukt oder eine Mischung daraus ist;

—Mischungsflüssigkeit;

—kleinteiliger kohlenstoffhaltiger Füllstoff; mit einer Partikelgröße von weniger als 100 Mesh

—und kohlenstoffhaltiger Zusatzstoff in Form eines kleinteiligen Materials mit einer Partikelgröße von mehr als 100 Mesh und/oder von Kohlenstoffasern.

2. Zelle nach Anspruch 1, dadurch gekennzeichnet, daß das feuerfeste Hartmaterial Titandiborid umfaßt.

3. Zelle nach Anspruch 2, dadurch gekennzeichnet, daß die Oberflächenschicht durch Aushärtung und Karbonisierung einer Beschichtung erhalten wird, die von ungefähr 10 bis ungefähr 90% Titandiborid, von ungefähr 1 bis ungefähr 40% Harzbinder, von ungefähr 2 bis 40% Mischungsflüssigkeit, von ungefähr 1 bis ungefähr 60% kohlenstoffhaltigen Füller, bis ungefähr 70% kohlenstoffhaltigen Füllstoff und wirksame Anteile an Härter und Entgasungsmittel aufweist.

4. Zelle nach einem der vorangehenden Ansprüche, dadurch gekennzeichnet, daß der warmaushärtende Harzbinder zusätzlich ein oder mehrere Phenolharze, Furanharzvorprodukte oder Mischungen daraus umfaßt.

5. Reduktionszelle für die Aluminiumherstellung mit zur Horizontalen geneigten Kathoden- und Anodenflächen, bei welcher die Kathodenfläche eine nichtgraphitisierte Kohlenstoffmatrix mit darin enthaltenem feuerfestem Hartmaterial umfaßt und während des Betriebs eine derartige Abtragungsrate zeigt, daß die Kohlenstoffmatrix und das feuerfeste Hartmaterial mit im wesentlichen gleicher Geschwindigkeit entfernt werden, wobei die Kathodenfläche ein Kathodensubstrat mit einer anhaftenden Schicht einer ausgehärteten und karbonisierten Beschichtung aufweist, die durch Aushärtung und Karbonisierung einer Zusammensetzung mit folgenden Bestandteilen erhalten wird:

—feuerfestes Hartmaterial;

—ein warmaushärtendes Harzbindersystem mit nichtgraphitisierenden warmaushärtenden Harzen, die keine Phenolharze, Furanharzvorprodukte und Mischungen daraus sind;

—kleinteiliger kohlenstoffhaltiger Füllstoff mit einer Partikelgröße von weniger als 100 Mesh;

—kohlenstoffhaltiger Zusatzstoff in Form eines kleinteiligen Materials mit einer Partikelgröße von mehr als 100 Mesh und/oder von Kohlenstoffasern.

6. Zelle nach Anspruch 5, dadurch gekennzeichnet daß das feuerfeste Hartmaterial Titandiborid ist und das Harzbindersystem einem Verkohlungsrückstand von mehr als 50% aufweist.

7. Zelle nach Anspruch 5 oder 6, dadurch gekennzeichnet, daß die Beschichtung zwischen 800°C und 1000°C eine prozentuale Dehnung aufweist, die sich um weniger als 0,2 von der prozentualen Dehnung des Kathodensubstrats unterscheidet.

8. Zelle nach einem der Ansprüche 5 bis 7, dadurch gekennzeichnet, daß die Zusammensetzung von ungefähr 20 bis ungefähr 70 Gew.-% Titandiborid, von ungefähr 0,5 bis ungefähr 15% Harzbinder, von ungefähr 2 bis ungefähr 40% Mischungsflüssigkeit, von ungefähr 1 bis ungefähr 60% kohlenstoffhaltiger Füllstoff, bis ungefähr 70% kohlenstoffhaltiges körniges Material mit einer Partikelgröße zwischen −4 und +100 Mesh, von ungefähr 0,5 bis ungefähr 1,0% Kohlenstoffasern und wirksame Anteile von Härter und Entgasungsmittel aufweist.

9. Zelle nach einem der Ansprüche 5 bis 8, dadurch gekennzeichnet, daß der warmaushärtende Harzbinder zusätzlich ein oder mehrere Phenolharze, Furanharzvorprodukte oder Mischungen daraus enthält.

10. Beschichtungszusammensetzung mit folgenden Bestandteilen:

ein feuerfestes Hartmaterial;

ein warmaushärtendes Bindersystem mit nichtgraphitisierenden warmaushärtenden Harzen, die nicht Phenolharze, Furanharz-Vorprodukte und Mischungen daraus sind;

kleinteiliger kohlenstoffhaltiger Füllstoff mit einer Partikelgröße von weniger als 100 Mesh

Kohlenstoffhaltiger Zusatzstoff in Form kleinteiligen Materials mit einer Partikelgröße von mehr als 100 Mesh und/oder von Kohlenstoffasern,

wobei das warmaushärtende Bindersystem einen Verkohlungsrückstand von mehr als 25% aufweist und das Bindersystem, der kohlenstoffhaltige Füllstoff und der kohlenstoffhaltige Zusatzstoff nach der Aushärtung und Karbonisierung eine Abtragungsrate zeigen, die im wesentlichen der kombinierten Verschließ- und Auflösungsrate des feuerfesten Hartmaterials unter den Umgebungsbedingungen einer in Betrieb befindlichen Aluminiumreduktionszelle gleich ist.

11. Beschichtungszusammensetzung nach Anspruch 10, dadurch gekennzeichnet, daß das feuerfeste Hartmaterial Titandiborid ist und ungefähr 10 bis 90 Gew.-% der Beschichtungszusammensetzung ausmacht.

12. Beschichtungszusammensetzung nach einem der Ansprüche 8 bis 10, dadurch gekennzeichnet, daß das Bindersystem aus Polyphenylen-, heterozyklischen, Epoxy-, Silikon-, Alkyd- und Polyimid-Harzen sowie Mischungen derselben ausgewählt ist und daß das feuerfeste Hartmaterial aus einkristallinem, bikristallinem und offenen Büscheln von einkristallinem Titandiborid ausgewählt ist.

13. Beschichtungszusammensetzung nach einem der Ansprüche 10 bis 12, dadurch gekennzeichnet, daß das warmaushärtende Bindersystem zusätzlich ein oder mehrere Phenolharze, ein oder mehrere Furanharzvorprodukte oder Mischungen daraus enthält.

14. Beschichtungszusammensetzung, gekennzeichnet, durch folgende Bestandteile:

ein feuerfestes Hartmaterial;

ein warmaushärtender Binder, welcher ein nichtgraphitisierendes warmaushärtendes Harz umfaßt, welches kein Phenolharz, kein Furanharzvorprodukt oder eine Mischung derselben ist;

Mischungsflüssigkeit;

kleinteiliger kohlenstoffhaltiger Füllstoff mit einer Partikelgröße von weniger als 100 Mesh;

kohlenstoffhaltiger Zusatzstoff in Form kleinteiligen Materials mit einer Partikelgröße von mehr als 100 Mesh und/oder von Kohlenstoffasern,

wobei der Harzbinder, die Mischungsflüssigkeit, der kohlenstoffhaltige Füllstoff und der kohlenstoffhaltige Zusatzstoff nach Aushärtung und Karbonisierung eine Abtragungsrate aufweisen, die im wesentlichen der kombinierten Verschleiß- und Auflösungsrate des feuerfesten Hartmaterials unter dem Umgebungsbedingungen einer in Betrieb befindlichen Aluminiumzelle aufweist.

15. Beschichtungszusammensetzung nach Anspruch 14, dadurch gekennzeichnet, daß sie zwischen 800°C und 1000°C eine Ausdehnung von weniger als 0,2% aufweist.

16. Beschichtungszusammensetzung nach Anspruch 14, dadurch gekennzeichnet, daß sie zwischen 800°C und 1000°C eine Ausdehnung von weniger als 0,2% und bei einem Temperaturzyklus von 20°C auf 1000°C und wieder auf 20°C eine Gesamtschwindung von weniger als 1,0% aufweist.

17. Beschichtungszusammensetzung nach einem der Ansprüche 14 bis 16, dadurch gekennzeichnet, daß der kohlenstoffhaltige Füllstoff ein Verhältnis von C:H von mehr als 2:1 aufweist.

18. Beschichtungszusammensetzung nach einem der Ansprüche 14 bis 17, dadurch gekennzeichnet, daß der kohlenstoffhaltige Zusatzstoff aus Kohlenstoffpartikeln mit einer Partikelgröße von ungefähr −4 Mesh bis ungefähr +100 Mesh, Kohlenstoffasern und Mischungen daraus ausgewählt ist und ungefähr 5 bis ungefährt 15% der Beschichtungszusammensetzung ausmacht.

19. Beschichtungszusammensetzung nach einem der Ansprüche 14 bis 18, dadurch gekennzeichnet, daß der warmaushärtende Harzbinder zusätzlich ein oder mehrere Phenolharze, ein oder mehrere Furanharzvorprodukte oder Mischungen daraus enthält.

20. Zusammensetzung zur Beschichtung der Kathodenflächen von Aluminiumzellen, gekennzeichnet durch folgende Bestandteile:

von ungefähr 20 bis ungefähr 70 Gew.-% feuerfestes Hartmaterial;

von ungefähr 1 bis ungefähr 40% warmaushärtender Harzbinder, welcher ein nichtgraphitisierendes warmaushärtendes Harz umfaßt, welches kein Phenolharz, kein Furanharzvorprodukt oder eine Mischung daraus ist;

von ungefähr 2 bis ungefähr 40% Mischungsflüssigkeit;

von ungefähr 10 bis ungefähr 40% kleinteiliger kohlenstoffhaltiger Füllstoff mit einer Partikelgröße von weniger als 100 Mesh;

von ungefähr 5 bis ungefähr 15% kohlenstoffhaltiger Zusatzstoff in Form kleinteiligen Materials mit einer Partikelgröße von mehr als 100 Mesh und/oder von Kohlenstoffaser;

wirksame Mengen an Gasentbindungsmittel und Härter, wobei der Harzbinder und die Mischungsflüssigkeit einen Verkohlungsrückstand von mehr als 50% aufweisen.

21. Beschichtungszusammensetzung nach Anspruch 20, dadurch gekennzeichnet, daß sie zwischen 800°C und 1000°C eine Ausdehnung von weniger als 0,2% und bei einem Temperaturzyklus von 20°C auf 1000°C und weider auf 20°C eine Gesamtschwindung von weniger als 1,0% aufweist.

22. Beschichtungszusammensetzung nach Anspruch 20 oder 21, dadurch gekennzeichnet, daß das feuerfeste Hartmaterial einkristallines Titandiborid umfaßt.

23. Beschichtungszusammensetzung nach einem der Ansprüche 20 bis 22, dadurch gekennzeichnet, daß der warmaushärtende Harzbinder zusätzlich ein oder mehrere Phenolharze, ein oder mehrere Furanharzvorprodukte oder Mischungen daraus umfaßt.

24. Verfahren zur Herstellung einer aluminiumbenetzbaren Kathodenfläche für eine Aluminiumreduktionszelle,

bei welchem auf ein Kathodensubstrat eine Beschichtungszusammensetzung mit folgenden Bestandteilen aufgebracht wird:

feuerfestes Hartmaterial;

ein warmaushärtender Harzbinder, welcher ein nichtgraphitisierendes warmaushärtendes Harz umfaßt, welches kein Phenolharz, kein Furanharzvorprodukt oder eine Mischung daraus ist;

Mischungsflüssigkeit;

kleinteiliger kohlenstoffhaltiger Füllstoff mit einer Partikelgröße von weniger als 100 Mesh;

und kohlenstoffhaltiger Zusatzstoff in der Form kleinteiligen Materials mit einer Partikelgröße von mehr als 100 Mesh und/oder von Kohlenstoffasern;

bei welchem die Beschichtungszusammensetzung zur Bildung einer relativ harten anhaftenden Oberflächenschicht ausgehärtet wird

und bei welchem die Schicht zur Bildung einer anhaftenden aluminiumbenetzbaren Oberflächenschicht karbonisiert wird, welche aus einem feuerfesten Hartmaterial in einer nichtgraphitisierten Kohlenstoffmatrix besteht und zwischen 800°C und 1000°C eine prozentuale Ausdehnung aufweist, die von der prozentualen Ausdehnung des Kathodensubstrats weniger als 0,2% abweicht.

25. Verfahren nach Anspruch 24, dadurch gekennzeichnet, daß die Beschichtungszusammensetzung außerhalb der Zelle auf Kohlenstoffblöcke der Kathode aufgebracht und vor der Anbringung in der Zelle ausgehärtet wird.

26. Verfahren nach Anspruch 25, dadurch gekennzeichnet, daß die Beschichtungszusammensetzung vor der Anbringung in der Zelle karbonisiert wird.

27. Verfahren nach Anspruch 25, dadurch gekennzeichnet, daß die Beschichtungszusammensetzung in der Zelle karbonisiert wird.

28. Verfahren nach Anspruch 24, dadurch gekennzeichnet, daß die Beschichtungszusammensetzung außerhalb der Zelle auf Kohlenstoffblöcke der Kathode aufgebracht und sodann in der Zelle ausgehärtet und karbonisiert wird.

29. Verfahren nach Anspruch 24, dadurch gekennzeichnet, daß die Beschichtungszusammensetzung in der Zelle auf das Kathodensubstrat aufgebracht und dann ausgehärtet und karbonisiert wird.

30. Verfahren nach einem der Ansprüche 24 bis 29, dadurch gekennzeichnet, daß die Beschichtungszusammensetzung auf eine Bindeschicht aufgebracht wird.

31. Verfahren nach einem der Ansprüche 24 bis 30, dadurch gekennzeichnet, daß die Beschichtungszusammensetzung in mehreren Schichten aufgebracht wird.

32. Verfahren nach einem der Ansprüche 24 bis 31, dadurch gekennzeichnet, daß das feuerfeste Hartmaterial Titandiborid umfaßt.

33. Verfahren nach Anspruch 31 und 32, dadurch gekennzeichnet, daß der Titandiborid-Gehalt sich bei den aufeinanderfolgenden Schichten ändert.

34. Verfahren nach einem der Ansprüche 24 bis 33, dadurch gekennzeichnet, daß der warmaushärtende Harzbinder zusätzlich ein oder mehrere Phenolharze, ein oder mehrere Furanharze-Vorprodukte oder Mischungen daraus enthält.

35. Aluminiumbenetzbare Kathode für eine Aluminiumzelle, gekennzeichnet durch folgende Merkmale:

ein Kathodensubstrat;

eine nichtgraphititsierte Kohlenstoffoberfläche;

feuerfestes Hartmaterial;

wobei das feuerfeste Hartmaterial in der Matrix der Kohlenstoffoberfläche enthalten ist und die Kohlenstoffoberfläche aus der Karbonisierung einer Beschichtung mit folgenden Bestandteilen resultiert:

ein nichtgraphitisierendes warmaushärtendes Harz, welches aus Polyphenylen-, heterozyklischen, Epoxy-, Silikon-, Alkyd-, und Polyimid-Harzen sowie Mischungen derselben ausgewählt ist;

Mischungsflüssigkeit;

kleinteiliger hohlenstoffhaltiger Füllstoff mit einer Partikelgröße von weniger als 100 Mesh;

kohlenstoffhaltiger Zusatzstoff in der Form kleinteiligen Materials mit einer Partikelgröße von mehr als 100 Mesh und/oder von Kohlenstoffasern;

Härter, Entgasungsmittel und Modifizierungsmittel, wobei die Kohlenstoffoberfläche eine Abtragungsrate aufweist, die im wesentlichen der kombinierten Verschleiß- und Auflösungsrate des feuerfesten Hartmaterials unter den Umgebungsbedingungen einer in Betrieb befindlichen Aluminiumzelle gleich ist.

36. Kathode nach Anspruch 35, dadurch gekennzeichnet, daß das feuerfeste Hartmaterial Titandiborid ist.

37. Kathode nach Anspruch 36, dadurch gekennzeichnet, daß das Titandiborid 35 bis 60 Gew.-% der auf das Substrat aufebrachten Beschichtungszusammensetzung ausmacht.

38. Kathode nach Anspruch 36 oder 37, dadurch gekennzeichnet, daß das Titandiborid aus einkristallinem Titandiborid, bikristallinem Titandiborid und offenen Büscheln von einkristallinem Titandiborid ausgewählt ist.

39. Kathode nach einem der Ansprüche 35 bis 38, dadurch gekennzeichnet, daß das warmaushärtende Harz zusätzlich ein oder mehrere Phenolharze, ein oder mehrere Furanharze oder Mischungen daraus enthält.

40. Verfahren zur Herstellung einer aluminiumbenetzbaren Kathodenfläche für eine Aluminiumreduktionszelle, gekennzeichnet durch folgende Verfahrensschritte:

auf eine Kathodensubstrat wird eine Beschichtungszusammensetzung mit folgenden Bestandteilen aufgebraucht:

feuerfestes Hartmaterial;

warmaushärtender Harzbinder, welcher ein nichtgraphitisierendes warmaushärtendes Harz umfaßt, welches kein Phenolharz, kein Furanharzvorprodukt oder eine Mischung daraus ist;

Mischungsflüssigkeit;

kleinteiliger kohlenstoffhaltiger Füllstoff mit einer Partikelgröße von weniger als 100 Mesh;

kohlenstoffhaltiger Zusatzstoff in der Form kleinteiligen Materials mit einer Partikelgröße von mehr als 100 Mesh und/oder von Kohlenstoffasern;

— die Beschichtungszusammensetzung wird bei einer Temperatur unterhalb 250°C über eine zur Erzielung der Polymerisation, der Vernetzung und der Entwicklung flüchtiger Stoffe ausreichende Zeit ausgehärtet;

— die ausgehärtete Beschichtungszusammensetzung wird weiterhin bei einer Temperatur beheizt, die ausreicht, um eine Karbonisierung ohne Graphitisierung des Harzbinders zu erzielen.

41. Verfahren nach Anspruch 40, dadurch gekennzeichnet, daß das Kathodensubstrat vor der Aufbringung der Beschichtungszusammensetzung auf eine Temperatur von ungefähr 20°C bis ungefähr 65°C vorgeheizt wird.

42. Verfahren nach Anspruch 41, dadurch gekennzeichnet, daß das Kathodensubstrat vor der Aufbringung der Beschichtungszusammensetzung auf eine Temperatur von ungefähr 40°C bis ungefähr 50°C vorgeheizt wird.

43. Verfahren nach einem der Ansprüche 40 bis 42, dadurch gekennzeichnet, daß die festen Bestandteile und die flüssigen Bestandteile der Beschichtungszusammensetzung je für sich bei einer Temperatur von ungefähr 20°C bis ungefähr 45°C vorgemischt werden.

44. Verfahren nach Anspruch 43, dadurch gekennzeichnet, daß die festen Bestandteile der Beschichtungszusammensetzung bei einer Temperatur von ungefähr 30°C bis ungefähr 35°C und die flüssigen Bestandteile der Beschichtungszusammensetzung bei einer Temperatur von ungefähr 40°C bis ungefähr 45°C vorgemischt werden.

45. Verfahren nach einem der Ansprüche 40 bis 44, dadurch gekennzeichnet, daß die ausgehärtete Beschichtung in einem Koksbett bei einer Temperatur von ungefähr 550°C bis ungefähr 600°C über eine Zeit weiterbeheizt wird, die zur teilweisen Karbonisierung der Beschichtung ausreicht.

46. Verfahren nach Anspruch 45, dadurch gekennzeichnet, daß die Beschichtung anschließend auf eine Temperatur von ungefähr 900°C bis ungefähr 1000°C beheizt wird.

47. Verfahren nach einem der Ansprüche 4 bis 46, dadurch gekennzeichnet, daß die Beschichtungszusammensetzung auf das Substrat aufgetragen wird und die Aushärtung innerhalb vier Stunden nach der Herstellung des Beschichtungsansatzes beginnt.

48. Verfahren nach einem der Ansprüche 40 bis 47, dadurch gekennzeichnet, daß der warmaushärtende Harzbinder zusätzlich ein oder mehrere Phenolharze, Furanharzvorprodukte oder Mischungen daraus enthält.

49. Aluminiumbenetzbare Kathode für eine Aluminium reduktionszelle, dadurch gekennzeichnet, daß sie ein Kathodensubstrat mit einer Oberflächenschicht umfaßt, die durch eine ausgehärte und karbonisierte Beschichtungszusammensetzung mit folgenden Bestandteilen gebildet ist:

feuerfestes Hartmaterial;

ein warmaushärtender Harzbinder, welcher ein nichtgraphitiserendes warmaushärtendes Harz umfaßt, welches kein Phenolharz, kein Furanharzvorprodukt oder eine Mischung daraus ist;

Mischungsflüssigkeit,

kleinteiliger kohlenstoffhaltiger Füllstoff mit einer Partikelgröße von weniger als 100 Mesh;

kohlenstoffhaltiger Zusatzstoff in Form kleinteiligen Materials mit einer Partikelgröße von mehr als 100 Mesh und/oder von Kohlenstoffasern.

50. Aluminiumbenetzbare Kathode nach Anspruch 49, dadurch gekennzeichnet, daß der warmaushärtende Harzbinder zusätzlich ein oder mehrere Phenolharze, Furanharzvorprodukte oder Mischungen daraus enthält.

51. Aluminiumbenetzbare Kathode nach Anspruch 49 oder 50, dadurch gekennzeichnet, daß das feuerfeste Hartmaterial Titandiborid ist.

52. Aluminiumreduktionszelle, dadurch gekennzeichnet, daß sie eine Kathode nach einem der Ansprüche 49 bis 51 umfaßt.

53. Aluminiumreduktionszelle nach Anspruch 52, dadurch gekennzeichnet, daß die Kathode gegen die Horizontale geneigt ist.

**Revendications**

1. Cellule pour la réduction électrolytique d'oxyde d'aluminium en aluminium, ayant une cathode comprenant un substrat de cathode avec une couche de surface mouillable à l'aluminium liée à cela, ladite couche comprenant un Matériau Dur Réfractaire dans une matrice de carbone non graphité ayant une vitesse d'ablation pendant une opération de ladite cellule sensiblement égale à la vitesse combinée d'usure et dissolution dudit Matériau Dur Réfractaire, ladite couche de surface montrant un élargissement entre 800°C et 1000°C de moins que 0,2 pour cent, et étant obtenu en cuisant et carbonisant un revêtement comprenant: un Matériau Dur Réfractaire; liant résineux thermodurcissable comprenant une résine thermodurcissable non graphitante autre q'une résine phénolique, un précurseur de résine furanne ou leur mélange; liquide de mélange; matière de remplissage carbonée particulaire ayant une taille de particule de moins que 100 mailles; et additif carboné sous la forme de matériau particulaire ayant une taille de particule plus grande que 100 mailles et/ou fibres de carbone.

2. Cellule selon la revendication 1, dans laquelle ledit Matériau Dur Réfractaire comprend du diborure de titane.

3. Cellule selon la revendication 2, dans laquelle ladite couche de surface est obtenue en cuisant et carbonisant un revêtement comprenant d'environ 10 à environ 90 pour cent de diborure de titane, d'environ 1 à environ 40 pour cent de liant résineux, d'environ 2 à environ 40 pour cent de liquide de mélange, d'environ 1 à environ 60 pour cent de matière de remplissage carbonée, jusqu'à environ 70 pour cent d'additif carboné, et des quantités efficaces d'agent de cuisson et d'agent de libération de gaz.

4. Cellule selon l'une quelconque des revendications précédentes dans laquelle le liant résineux thermodurcissable contient en supplément une ou plus résines phénoliques, précurseurs de résine furanne ou leur mélange.

5. Cellule pour réduction en aluminium ayant des surfaces d'anode et cathode inclinées à partir de l'horizontale, dans laquelle ladite surface de cathode comprend une matrice de carbone non graphité ayant dedans un Matériau Dur Réfractaire, ladite surface montrant une vitesse d'ablation pendant le fonctionnement de ladite cellule telle que ladite matrice de carbone et ledit Matériau Dur Réfractaire soient éliminés à sensiblement la même vitesse, dans laquelle ladite surface de cathode comprend un substrat de cathode ayant une couche adhérente d'un revêtement cuit et carbonisé obtenue en cuisant et carbonisant une composition comprenant: un Matériau Dur Réfractaire; un système liant résineux thermodurcissable contenant des résines thermodurcissables non graphitantes autres que des résines phénoliques, précurseurs de résine furanne et leur mélange; une matière de remplissage carbonée particulaire ayant une taille de particule de moins que 100 mailles; et un additif carboné sous la forme d'un matériau particulaire ayant une taille de particule plus grande que 100 mailles et/ou fibres de carbone.

6. Cellule selon la revendication 5, dans laquelle ledit Matériau Dur Réfractaire est du diborure de titane, et ledit système liant résineux montre un rendement de charbonnage de plus que 50 pour cent.

7. Cellule selon l'une des revendications 5 et 6, dans laquelle ledit revêtement montre un pourcentage d'élargissement entre 800°C et 1000°C qui diffère par moins que 0,2 du pourcentage d'élargissement montré par ledit substrat de cathode.

8. Cellule selon l'une des revendications 5 à 7, dans laquelle ladite composition comprend d'environ 20 à environ 70 pour cent en poids de diborure de titane, d'environ 0,5 à environ 15 pour cent de liant résineux, d'environ 2 à envirion 40 pour cent de liquide de mélange, d'environ 1 à environ 60 pour cent de matière de remplissage carbonée, jusqu'à 70 pour cent d'agrégat carboné ayant une taille de particule entre −4 et +100 mailles, d'environ 0,5 à environ 1 pour cent de fibre de carbone, et des quantités efficaces d'agent de cuisson et d'agent de libération de gaz.

9. Cellule selon l'une quelconque des revendications 5 à 8 dans laquelle le liant résineux thermodurcissable contient en supplément une ou plus résines phénoliques, précurseurs de résine furanne ou leurs mélanges.

10. Composition de revêtement comprenant: un Matériau Dur Réfractaire; un système liant

thermodurcissable contenant des résines thermodurcissables non graphitantes autres que des résines phénoliques, précurseurs de résine furanne et leur mélange; une matière de remplissage carbonée ayant une taille de particule de moins que 100 mailles; et un additif carboné sous la forme de matériau particulaire ayant une taille de particule plus grande que 100 mailles et/ou fibres de carbone; dans laquelle ledit système liant thermodurcissable montre un rendement de charbonnage plus grand que 25 pour cent, et lesdits système liant, matière de remplissage carbonée et additif carboné montrent une vitesse d'ablation après cuisson et carbonisation sensiblement égale à la vitesse combinée d'usure et dissolution dudit Matériau Dur Réfractaire dans l'environnement d'une cellule pour réduction en aluminium pendant son fonctionnement.

11. Composition de revêtement selon la revendication 10, dans laquelle ledit Matériau Dur Réfractaire est du diborure de titane, et comprend d'environ 10 à environ 90 pour cent en poids de la composition de revêtement.

12. Composition de revêtement selon l'une des revendications 8 à 10, dans laquelle ledit système liant comprend un liant résineux choisi parmi polyphénylène, hétérocyclique, époxy, silicone, alkyde, et résines polyimides, et leurs mélanges, et dans laquelle ledit Matériau Dur Réfractaire est choisi parmi cristal simple, bicristal, et conglomérats ouverts de diborure de titane de cristal simple.

13. Composition de revêtement selon l'une des revendications 10 à 12, dans laquelle le système liant thermodurcissable contient en supplément une ou plus résines phénoliques, précurseurs de résine furanne ou leurs mélanges.

14. Composition de revêtement comprenant: un Matériau Dur Réfractaire; un liant résineux thermodurcissable comprenant une résine thermodurcissable non graphitante autre qu'une résine phénolique, un précurseur de résine furanne ou leur mélange; liquide de mélange; matière de remplissage carbonée particulaire ayant une taille de particule de moins que 100 mailles et additif carboné sous la forme de matériau particulaire ayant une taille de particule plus grande que 100 mailles et/ou fibres de carbone; dans laquelle lesdits liant résineux, liquide de mélange, matière de remplissage carbonée et additif carboné ont une vitesse d'ablation, après cuisson et carbonisation, sensiblement égale à la vitesse combinée d'usure et dissolution dudit Matériau Dur Réfractaire dans un environnement de cellule pour production d'aluminium pendant le fonctionnement de la cellule.

15. Composition de revêtement selon la revendication 14 qui montre un élargissement entre 800°C et 1000°C de moins que 0,2 pour cent.

16. Composition de revêtement selon la revendication 14 qui montre un élargissement de moins que 0,2 pour cent entre 800°C et 1000°C, et un retrait hors tout de moins que 1,0 pour cent sur itération de 20°C à 1000°C à 20°C.

17. Composition de revêtement selon l'une des revendications 14 à 16 dans laquelle ladite matière de remplissage carbonée a un rapport C:H plus grand que 2:1.

18. Composition de revêtement selon l'une des revendications 14 à 17 dans laquelle ledit additif carboné est choisi parmi agrégat de carbone ayant une taille de particule environ −4 mailles et environ +100 mailles, fibre de carbone et leurs mélanges, et comprend d'environ 5 à environ 15 pour cent de la composition de revêtement.

19. Composition de revêtement selon l'une des revendications 14 à 18 dans laquelle le liant résineux thermodurcissable contient en supplément une ou plus résines phénoliques, précurseurs de résine furanne ou leurs mélanges.

20. Composition pour recouvrir des surfaces de cathode de cellule pour production d'aluminium, qui comprend: d'environ 20 à environ 70 pour cent en poids de Matériau Dur Réfractaire; d'environ 1 à environ 40 pour cent de liant résineux thermodurcissable comprenant une résine thermodurcissable non graphitante autre qu'une résine phénolique, un précurseur de résine furanne ou leur mélange; d'environ 2 à environ 40 pour cent de liquide de mélange; d'environ 10 à environ 40 pour cent de matière de remplissage carbonée particulaire ayant une taille de particule de moins que 100 mailles; d'environ 5 à environ 15 pour cent d'additif carboné sous la forme de matériau particulaire ayant une taille de particule plus grande que 100 mailles et/ou fibres de carbone; et des quantités efficaces d'agent de libération de gaz et d'agent de cuisson; dans laquelle ledit liant résineux et liquide de mélange montrent un rendement de charbonnage plus grand que environ 50 pour cent.

21. Composition de revêtement selon la revendication 20, dans laquelle ladite composition de revêtement a un élargissement de moins que 0,2 pour cent entre 800°C et 1000°C, et un retrait hors tout de moins de 1,0 pour cent quand itérée de 20°C à 1000°C à 20°C.

22. Composition de revêtement selon l'une des revendications 20 et 21 dans laquelle ledit Matériau Dur Réfractaire comprend du diborure de titane de cristal simple.

23. Composition de revêtement selon l'une des revendications 20 à 22, dans laquelle le liant résineux thermodurcissable contient en supplément une ou plus résines phénoliques, précurseurs de résine furanne ou leurs mélanges.

24. Procédé pour produire une surface de cathode mouillable à l'aluminium pour une cellule de réduction en aluminium, qui consiste à appliquer à un substrat de cathode une composition de revêtement comprenant: Matériau Dur Réfractaire; un liant résineux thermodurcissable comprenant une résine thermodurcissable non graphitante autre qu'une résine phénolique, un précurseur de résine furanne ou leur mélange; un liquide de mélange; une matière de remplissage carbonée particulaire ayant une taille de

particule de moins que 100 mailles; et un additif carboné sous la forme de matériau particulaire ayant une taille de particule plus grande que 100 mailles et/ou fibres de carbone; cuire et recouvrir la composition pour produire une couche de surface adhérente, relativement dure, et carboniser ladite couche pour produire une couche de surface mouillable d'aluminium comprenant un Matériau Dur Réfractaire dans une matrice de carbone non graphitée, ladite couche de surface ayant un pourcentage d'élargissement entre 800°C et 1000°C qui diffère du pourcentage d'élargissement dudit substrat de cathode par moins que 0,2.

25. Procédé selon la revendication 24, dans lequel ladite composition de revêtement est appliquée à des blocs de cathode de carbone externes à ladite cellule, et cuite antérieurement au placement dans ladite cellule.

26. Procédé selon la revendication 25, dans lequel ladite composition de revêtement est carbonisée précédemment au placement dans ladie cellule.

27. Procédé selon la revendication 25, dans lequel ladite composition de revêtement est carbonisée dans ladite cellule.

28. Procédé selon la revendication 24, dans lequel ladite composition de revêtement est appliquée à des blocs de cathode de carbone externes à ladite cellule, et puis cuite et carbonisée dans ladite cellule.

29. Procédé selon la revendication 24, dans lequel ladite composition de revêtement est appliquée au substrat de cathode dans ladite cellule, et puis cuite et carbonisée.

30. Procédé selon l'une des revendications 24 à 29, dans lequel ladite composition de revêtement est appliquée sur une couche liante.

31. Procédé selon l'une des revendications 24 à 30, dans lequel ladite composition de revêtement est appliquée dans une pluralité de couches.

32. Procédé selon l'une des revendications 24 à 31, dans lequel ledit Matériau Dur Réfractaire comprend du diborure de titane.

33. Procédé selon la revendication 32 quand dépendante de la revendication 32, dans lequel le contenu de diborure de titane se modifie dans des couches successives.

34. Procédé selon l'une des revendications 24 à 33, dans lequel le liant résineux thermodurcissable contient en supplément une ou plus résines phénoliques, précurseurs de résine furanne ou leurs mélanges.

35. Cathode mouillable à l'aluminium pour une cellule pour production d'aluminium, comprenant un substrat de cathode, une surface de carbone non graphitée, et un Matériau Dur Réfractaire, ledit Matériau Dur Réfractaire étant contenu dans la matrice de ladite surface de carbone, ladite surface de carbone résultant de la carbonisation d'un revêtement constitué d'une résine thermodurcissable non graphitante choisie parmi polyphénylène, hétérocyclique, époxy, silicone, alkyde, et résines polyimides, et leurs mélanges, liquide de mélange, matière de remplissage carbonée particulaire ayant une taille de particule de moins que 100 mailles, et additif carboné sous la forme de matériau particulaire ayant une taille de particule plus grande que 100 mailles et/ou fibres de carbone, agents de cuisson, agents de libération de gaz, et agents modifiants, dans laquelle ladite surface de carbone a une vitesse d'ablation sensiblement égale à la vitesse combinée d'usure et dissolution dudit Matériau Dur Réfractaire dans l'environnement de ladite cellule pour production d'aluminium pendant son fonctionnement.

36. Cathode selon la revendication 35, dans laquelle ledit Matériau Dur Réfractaire est du diborure de titane.

37. Cathode selon la revendication 36, dans laquelle ledit diborure de titane comprend de 35 à 60 pour cent en poids de la composition de revêtement appliquée au substrat.

38. Cathode selon l'une des revendications 36 et 37, dans laquelle ledit diborure de titane est choisi parmi diborure de titane de cristal simple, diborure de titane de bicristal, et agrégats ouverst de diborure de titane de cristal simple.

39. Cathode selon l'une des revendications 35 à 38, dans laquelle la résine thermodurcissable contient en supplément une ou plus résines phénoliques, résines furanne ou leurs mélanges.

40. Procédé pour produire une surface de cathode mouillable à l'aluminium pour une cellule de réduction en aluminium, qui consiste à appliquer à un substrat de cathode une composition de revêtement comprenant: un Matériau Dur Réfractaire; un liant résineux thermodurcissable comprenant une résine thermodurcissable non graphitante autre qu'une résine phénolique, un précurseur de résine furanne ou leur mélange; un liquide de mélange, une matière de remplissage carbonée particulaire ayant une taille de particule de moins que 100 mailles; et un additif carboné sous la forme de matériau particulaire ayant une taille de particule plus grande que 100 mailles et/ou fibres de carbone; cuire ladite composition de revêtement à une température au-dessous de 250°C pendant un temps suffisant pour effectuer une polymérisation, réticulation et dégagement de matériaux volatiles, et de plus chauffage de la composition de revêtement cuite à une température suffisante pour effectuer sa carbonisation sans graphitation dudit liant résineux.

41. Procédé selon la revendication 40, dans lequel ledit substrat de cathode est préchauffé à une température d'environ 20°C à environ 65°C précédemment à une application de ladite composition de revêtement.

42. Procédé selon la revendication 41, dans lequel ledit substrat de cathode est préchauffé à une température d'environ 40°C à environ 50°C précédemment à une application de ladite composition de revêtement.

43. Procédé selon l'une des revendications 40 à 42, dans lequel les parties solides et les parties liquides

de ladite composition de revêtement sont individuellement prémélangées à une température d'environ 20°C à environ 45°C.

44. Procédé selon la revendication 43, dans lequel les parties solides de ladite composition de revêtement sont prémélangées à une température d'environ 30°C à environ 35°C, et les parties liquides de ladite composition de revêtement sont prémélangées à une température d'environ 40°C à environ 45°C.

45. Procédé selon l'une des revendications 40 à 44, dans lequel le revêtement cuit est de plus chauffé à une température d'environ 550°C à environ 600°C dans un lit de coke pendant un temps suffisant pour partiellement carboniser ledit revêtement.

46. Procédé selon la revendication 45, dans lequel ledit revêtement est par la suite chauffé à une température d'environ 900°C à environ 1000°C.

47. Procédé selon l'une des revendications 40 à 46 dans lequel ladite composition de revêtement est appliquée audit substrat et une cuisson est commencée dans 4 heures de préparation.

48. Procédé selon l'une des revendications 40 à 47 dans lequel le liant résineux thermodurcissable contient en supplément une ou plus résines phénoliques, précurseurs de résine furanne ou leurs mélanges.

49. Cathode mouillable-aluminium pour une cellule de réduction d'aluminium comprenant un substrat de cathode ayant une couche de surface, ladite couche de surface étant une composition cuite et carbonisée comprenant un Matériau Dur Réfractaire; un liant résineux thermodurcissable comprenant une résine thermodurcissable non graphitante autre qu'une résine phénolique, un précurseur de résine furanne, ou leur mélange; un liquide de mélange; une matière de remplissage carbonée particulaire ayant une taille de particule de moins que 100 mailles; un additif carboné sous la forme de matériau particulaire ayant une taille de particule plus grande que 100 mailles et/ou fibres de carbone.

50. Cathode mouillable-aluminium selon la revendication 49 dans laquelle ledit liant résineux thermodurcissable contient en supplément une ou plus résines phénoliques, précurseurs de résine furanne ou leurs mélanges.

51. Cathode mouillable-aluminium selon l'une des revendications 49 et 50 dans laquelle ledit Matériau Dur Réfractaire est du diborure de titane.

52. Cellule de réduction en aluminium comprenant une cathode selon l'une quelconque des revendications 49 à 51.

53. Cellule de réduction en aluminium selon la revendication 52 dans laquelle ladite cathode est inclinée à partir de l'horizontale.